(19) **Europäisches Patentamt**
**European Patent Office**
**Office européen des brevets**

(11) **EP 2 837 423 A2**

(12) **EUROPEAN PATENT APPLICATION**

(43) Date of publication:
**18.02.2015 Bulletin 2015/08**

(51) Int Cl.:
*B01J 37/02* [(2006.01)]    *B01J 23/745* [(2006.01)]
*B01J 23/75* [(2006.01)]    *B01J 23/755* [(2006.01)]
*B01J 23/78* [(2006.01)]    *B01J 23/889* [(2006.01)]
*C10G 2/00* [(2006.01)]    *B01J 37/08* [(2006.01)]
*B01J 37/18* [(2006.01)]    *B01J 37/34* [(2006.01)]
*B01J 35/00* [(2006.01)]    *B01J 35/10* [(2006.01)]
*B01J 21/12* [(2006.01)]    *B01J 21/08* [(2006.01)]

(21) Application number: **14183074.5**

(22) Date of filing: **21.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.01.2012 GB 201201086**
           **25.01.2012 GB 201201305**

(62) Document number(s) of the earlier application(s) in accordance with Art. 76 EPC:
**13702664.7 / 2 794 078**

(71) Applicant: **University of Newcastle Upon Tyne Tyne and Wear NE1 7RU (GB)**

(72) Inventors:
• **Akay, Galip**
**Newcastle upon Tyne**
**Tyne and Wear NE1 7RU (GB)**
• **Al-Harrasi, Wail S. S.**
**Newcastle upon Tyne**
**Tyne and Wear NE1 7RU (GB)**

• **El-Naggar, Ahmed M. A.**
**Newcastle upon Tyne**
**Tyne and Wear NE1 7RU (GB)**
• **Mohamed, Abdulaziz H.**
**Newcastle upon Tyne**
**Tyne and Wear NE1 7RU (GB)**
• **Zhang, Kui**
**Newcastle upon Tyne**
**Tyne and Wear NE1 7RU (GB)**

(74) Representative: **Retter, Jocelyn Anna**
**Urquhart-Dykes & Lord LLP**
**12th Floor**
**Cale Cross House**
**156 Pilgrim Street**
**Newcastle-upon-Tyne NE1 6SU (GB)**

Remarks:
This application was filed on 01-09-2014 as a divisional application to the application mentioned under INID code 62.

(54) **Integrated intensified biorefinery for gas-to-liquid conversion**

(57)     A support device for carrying a selectively permeable membrane is disclosed along with apparatuses and methods of removing long chain hydrocarbons from a stream of gas. The gas cleaning apparatus uses, individually or in combination, plasma, catalyst and electrodes containing catalysts to perform the cleaning of the gas.

Figure 1

**Description**

The present invention relates to a method and apparatus for cleaning gases and to a gas separation device and relates particularly, but not exclusively, to syngas production, cleaning and conversion to liquid fuels (refinement) processes.

The conversion of syngas, either produced through the gasification of biomass or waste to liquid fuels, is an important process for the establishment of a renewable energy technology which can be termed as 'Biorefinery'. The important differences between Biorefinery and the well-established refineries, 'Oil Refinery', 'Petrochemical Refinery' or large volume chemical production platforms such as ammonia plants, is that the Petrochemical/Ammonia plants operate at high production capacity as centralised production platform due to the fact that its feedstock, 'Crude Oil', or 'Natural Gas' are also centralised. The economical viability of such centralised production facilities requires the 'economies of scale'. However, in the case of energy conversion/chemicals production facilities based on biomass/waste, the feedstock availability is localised which in turn requires localised, small scale production facilities. Such production facilities cannot benefit from the economies of scale and hence a new approach needs to be taken for production from distributed feedstock in order to achieve sustainability. This approach can also be applied to non-renewable feedstocks which are only available in small scale, often as by-product of a large scale operation. Such non-renewable small scale, distributed feedstock include flare (or associated petroleum gas) which are produced during crude oil extraction in oil fields or indeed waste chemicals.

In gasification of biomass, the most important and difficult syngas cleaning operation is the removal of tars. It is preferable to prevent tar production during gasification (which can be described as primary tar removal) since the calorific value of tars can constitute 10% of syngas. Water scrubbing of syngas to remove water soluble components, including metal ions is also an important process. These processes are sufficient to generate syngas which can be used in internal combustion engines for electricity generation but further reduction of tars is necessary in chemical conversion or fuel cell applications of syngas. These operations usually take place outside the gasifier and can be described as secondary tar removal. Existing systems of secondary tar removal either do not provide sufficient cleaning to allow syngas to be used in chemical conversion or fuel cell applications or have very high energy requirements making them inefficient and impractical to use, particularly in small scale plants.

When testing selectively permeable membranes for use in, for example a biomass gasifier where oxygen is preferably selectively supplied to the gasifying biomass, it is important that an airtight seal is formed between the selectively permeable membrane and the structure it is being supported on. Forming a sufficiently heat resistant seal between the typically ceramic membrane and the typically metal support structure has previously not been possible.

Preferred embodiments of the present invention seek to overcome the above described disadvantages of the prior art.

According to an aspect of the present invention, there is provided a support device for carrying a selectively permeable element, the device comprising:

> at least one support member including at least one support surface;

> at least one selectively permeable element, partially supported on said support surface; and

> at least one sealing portion for sealing said selectively permeable element to said surface, wherein said sealing portion comprises at least one glass material.

By sealing the junction between the support surface of the support device and the selectively permeable element using glass, the advantage is provided that the support device can be fully sealed with respect to the selectively permeable element, thereby allowing the support device to be used in test apparatus. As a result, different compositions of selectively permeable elements can be tested.

The device may further comprise at least one foamed metal at least partially covering said sealing portion.

By covering the sealing portion with metal foam, this provides the advantage that the sealing portion is protected.

In another preferred embodiment, the foamed metal covers said sealing portion and exposed portions of said selectively permeable element.

By covering the sealing portion and exposed portions of the selectively permeable element, this provides the advantage that both the seal and the element are protected, and has been shown for some selectively permeable elements to enhance the permittivity of the element.

In a further preferred embodiment, the glass comprises sodalime glass.

In another preferred embodiment the selectively permeable element comprises a membrane.

The selectively permeable element may be selectively permeable to at least one of oxygen and hydrogen.

In a preferred embodiment, the support member comprises at least one metal.

In another preferred embodiment, the metal is at least partially oxidisable on its surface.

By partially oxidising the surface of the support member prior to sealing provides the advantage that a better seal is formed as a result of the oxidisation.

In a preferred embodiment, the metal is stainless steel.

In another preferred embodiment, the support surface comprises a plurality of holes extending therethrough.

According to another aspect of the present invention there is provided an apparatus for separating a component of a gas from other components using a selectively permeable element, the apparatus comprising a vessel having at least one input and inlet and at least one outlet and said vessel divided into at least one first volume and at least one second volume, wherein said first and second volumes are separated by a support device as set out above.

The apparatus may further comprise at least one sealing element for sealing the joint between said vessel and said support device.

In another preferred embodiment, the sealing member comprises copper.

According to another aspect of the present invention there is provided a method of forming a support device for a selectively permeable element comprising the steps:-placing at least one sealing material, in the form of at least one glass material, into engagement between a support surface of a support member and a support element that is to be partially supported on said support surface;

heating said support member, selectively permeable element and sealing material so as to melt said sealing material.

The method may further comprise heating said support element so as to form an oxidised layer on a surface of said support member that engages said sealing material.

In another preferred embodiment, the glass is powdered and mixed with a liquid to form a paste before application.

In a further preferred embodiment, the liquid is polyethylene glycol.

By mixing the glass, in a powdered form, with a liquid, such as polyethylene glycol, the advantage is provided that the mixture can be easily applied to either the support device or the membrane and then when the device is heated to a sufficiently high temperature to melt the glass, the liquid is driven off or broken down leaving only the glass in molten form which then solidifies and seals on cooling.

According to an aspect of the present invention, there is provided an apparatus for the removal of long chain hydrocarbons from a stream of gas, the apparatus comprising:

a vessel including at least one inlet and at least one outlet, allowing a stream of gas to pass therebetween;

a plurality of electrodes including at least one anode and at least one cathode, contained within said vessel, such that said stream of gas passes between at least one said anode and at least one said cathode, wherein at least one said electrode comprises at least one catalyst.

By providing an apparatus in which a stream of gas, typically syngas, is passed between an anode and a cathode and one or both of the electrodes includes a catalyst, provides the following advantages. Any long chain hydrocarbons whose charge causes them to be attracted to an electrode are captured by the electrode and broken down into shorter chain hydrocarbons following interaction with the catalyst in the electrode. As a result, the calorific value of the longer chain hydrocarbon is not lost from the syngas but the syngas output from this cleaning device is sufficiently pure for the syngas to be used in downstream chemical reactions including the production of ammonia and biofuels.

In a preferred embodiment at least one cathode comprises at least one said catalyst.

By including a catalyst in the cathode, the cathode provides the most efficient use of catalyst material.

In a preferred embodiment, at least one anode and at least one cathode comprise at least one catalyst.

In another preferred embodiment, the electrode including said catalyst further comprises at least one porous metal.

By using an electrode formed from catalyst and a porous metal, the advantage is provided that a large surface area of catalyst material is available within the pores of the electrode. This ensures that catalyst is always available for any long chain hydrocarbons that are attracted to the electrode.

In another preferred embodiment, the metal comprises nickel.

In a further preferred embodiment, the catalyst comprises a cobalt based catalyst.

In a preferred embodiment, the catalyst is supported on silica.

By supporting the catalyst on silica, the advantage is provided that the maximum catalyst surface area is available to enable to breakdown of the long chain hydrocarbons.

The apparatus may further comprise at least one water supply for supplying a spray of water into said vessel.

By providing a supply of water, in the form of a spray into a vessel, the advantage is provided that water soluble contaminants in the gas stream will be washed out of the gas stream. Furthermore, any long chain hydrocarbons that are not broken down upon engagement with the catalyst electrode, or leave a residue that cannot be further broken down, are washed from the electrode and collected as waste for disposal.

The apparatus may further comprise at least one bed of solid material located at least partially between said electrodes.

In a preferred embodiment, the bed comprises a fixed bed.

In another preferred embodiment, the bed comprises a fluidised bed.

By using fixed or fluidised beds of solid material within the space between the electrodes, the advantage is provided that some long chain hydrocarbons can be adsorbed into the bed material before reaching the electrode. This is in particular hydrocarbons that are less likely to break down on contact with the electrode and catalyst.

In a preferred embodiment, the solid material comprises at least one tar adsorbent.

In another preferred embodiment, the solid material comprises at least one catalyst.

In a further preferred embodiment, the solid material comprises at least one PolyHIPE polymer (PHP).

In a preferred embodiment, the solid material comprises at least one plasma catalysis promoter.

By using a plasma catalysis promoter, the advantage is provided that plasma can form between the electrodes encouraging breakdown of the long chain hydrocarbons even before they reach the electrode. Because the plasma catalysis promoter includes a plasma promoter and a catalyst in close proximity to the plasma promoter, the plasma which breaks down the long chain hydrocarbons is forming in close proximity to the catalyst ensuring the most ideal conditions for long chain hydrocarbon breakdown are available together.

In a preferred embodiment, at least one electrode is annular forming an outer electrode extending around an inner electrode.

In another preferred embodiment, the outer electrode comprises a cathode and said inner electrode comprises an anode.

In a further preferred embodiment the inner electrode is annular.

In a further preferred embodiment the inner electrode is at least partially conical.

By providing annular electrodes, with one inside the other and most preferably a partially conical inner electrode, the advantage is provided that the stream of gas is directed towards the outer electrode by creating a strong radial velocity component of the flowing gases. As a result, the outer electrode, with the catalyst, has a large surface area and the stream of gas is compressed radially outward, towards the outer electrode, thereby encouraging the larger particles and molecules towards the outer electrode. The large surface area of the outer electrode provides the greatest possible surface area for engagement between the long chain hydrocarbons and the catalyst.

In a preferred embodiment, catalyst is a metal catalyst supported on a microporous solid support obtained or obtainable from a process comprising:

(A) adding together a metal catalyst precursor and surface-modified nanoparticles of the material of the microporous solid support to form an aqueous supported-catalyst precursor solution; and

(B) subjecting the aqueous supported-catalyst precursor solution to a source of energy at a power sufficient to cause repeated formation and collapse of films in the supported-catalyst precursor solution and to facilitate the emergence of the metal catalyst precursor or a decomposition product thereof supported on the microporous solid support.

According to another aspect of the present invention, there is provided a method for removing long chain hydrocarbons from a stream of gas, comprising passing a stream of gas between at least one inlet and at least one outlet of a vessel; the stream passing between a plurality of electrodes including at least one anode and at least one cathode, wherein at least one of said electrodes comprises at least one catalyst.

In a preferred embodiment, the gas is syngas.

According to a further aspect of the present invention there is provided an apparatus for the removal of long chain hydrocarbons from a stream of gas, the apparatus comprising:

a vessel including at least one inlet and at least one outlet, allowing a stream of gas to pass therebetween;

a plurality of electrodes including at least one anode and at least one cathode, having a space therebetween contained within said vessel, such that said stream of gas passes between said electrodes, wherein a cross-sectional area of the space between the electrodes, measured perpendicular to the path of the stream of gas, decreases at at least one point between said inlet and said outlet.

By decreasing the cross-sectional space between the two electrodes, the advantage is provided that the long chain hydrocarbon contaminants within the stream of gas are directed towards the electrodes, thereby increasing the chances that the contaminants will engage the electrodes which will then facilitate removal or breakdown of the contaminant.

In a preferred embodiment, at least one electrode is annular forming an outer electrode extending around an inner electrode.

In another preferred embodiment, the outer electrode comprises a cathode and said inner electrode comprises an anode.

In a further preferred embodiment the inner electrode is annular.

In another preferred embodiment, the inner electrode is at least partially conical.

By providing annular electrodes, with one inside the other and most preferably a partially conical inner electrode, the advantage is provided that the stream of gas is directed towards the outer electrode by the increasing cross-sectional area of the inner electrode. As a result, the outer electrode, with the catalyst, has a large surface area and the stream of gas is compressed radially outward, towards the outer electrode, thereby encouraging the larger particles and molecules towards the outer electrode. The large surface area of the outer electrode provides the greatest possible surface area for engagement between the long chain hydrocarbons and the catalyst.

In a preferred embodiment, at least one electrode comprises a catalyst.

By providing an apparatus in which a stream of gas, typically syngas, is passed between an anode and a cathode and one or both of the electrodes includes a catalyst, provides the following advantages. Any long chain hydrocarbons whose charge causes them to be attracted to an electrode are captured by the electrode and broken down into shorter chain hydrocarbons following interaction with the catalyst in the electrode. As a result, the calorific value of the longer chain hydrocarbon is not lost from the syngas but the syngas output from this cleaning device is sufficiently pure for the syngas to be used in downstream chemical reactions including the production of ammonia and biofuels.

In another preferred embodiment, at least one cathode comprises at least one said catalyst.

In a preferred embodiment, at least one anode and at least one cathode comprise at least one catalyst.

In another preferred embodiment the electrode comprising said catalyst further comprises at least one porous metal.

By using an electrode formed from catalyst and a porous metal, the advantage is provided that a large surface area of catalyst material is available within the pores of the electrode. This ensures that catalyst is always available for any long chain hydrocarbons that are attracted to the electrode.

In a preferred embodiment the metal comprises nickel.

In another preferred embodiment the catalyst comprises a cobalt based catalyst.

In a further preferred embodiment the catalyst is supported on silica.

By supporting the catalyst on silica, the advantage is provided that the maximum catalyst surface area is available to enable to breakdown of the long chain hydrocarbons.

In a preferred embodiment the catalyst is a metal catalyst supported on a microporous solid support obtained or obtainable from a process comprising:

(A) adding together a metal catalyst precursor and surface-modified nanoparticles of the material of the microporous solid support to form an aqueous supported-catalyst precursor solution; and

(B) subjecting the aqueous supported-catalyst precursor solution to a source of energy at a power sufficient to cause repeated formation and collapse of films in the supported-catalyst precursor solution and to facilitate the emergence of the metal catalyst precursor or a decomposition product thereof supported on the microporous solid support.

According to a further aspect of the present invention there is provided a method of removing long chain hydrocarbons from a stream of gas, comprising:

generating plasma in a plasma generation zone of a vessel between an anode and a cathode, passing a stream of gas between at least one inlet and at least one outlet and through said plasma generation zone of said vessel, said vessel containing at least one catalyst within said plasma generation zone.

Providing at least one catalyst in the plasma generation zone of the plasma vessel provides the advantage of improving the breakdown of long chain hydrocarbons in the plasma.

In a preferred embodiment, the vessel also contains at least one plasma catalysis promoter.

By providing catalyst and plasma catalysis promoter in close proximity, the advantage is provided that plasma is able to act most efficiently on the long chain hydrocarbons.

In another preferred embodiment the plasma catalysis promoter comprises at least one of barium titanate and glass balls.

In a further preferred embodiment the catalyst comprises at least one of nickel, cobalt and iron.

In a preferred embodiment, the catalyst is a metal catalyst supported on a microporous solid support obtained or obtainable from a process comprising:

(A) adding together a metal catalyst precursor and surface-modified nanoparticles of the material of the microporous solid support to form an aqueous supported-catalyst precursor solution; and

(B) subjecting the aqueous supported-catalyst precursor solution to a source of energy at a power sufficient to cause repeated formation and collapse of films in the supported-catalyst precursor solution and to facilitate the emergence of the metal catalyst precursor or a decomposition product thereof supported on the microporous solid support.

Any catalyst referred to herein may be a catalyst which is disclosed generally or specifically in the PCT application no. PCT/GB2013/050122 filed on an even date herewith in the name of University of Newcastle upon Tyne. The entirety of this PCT application is incorporated by reference.

Preferred embodiments of the present invention will now be described, by way of example only, and not in any limitative sense, with reference to the accompanying drawings in which:-

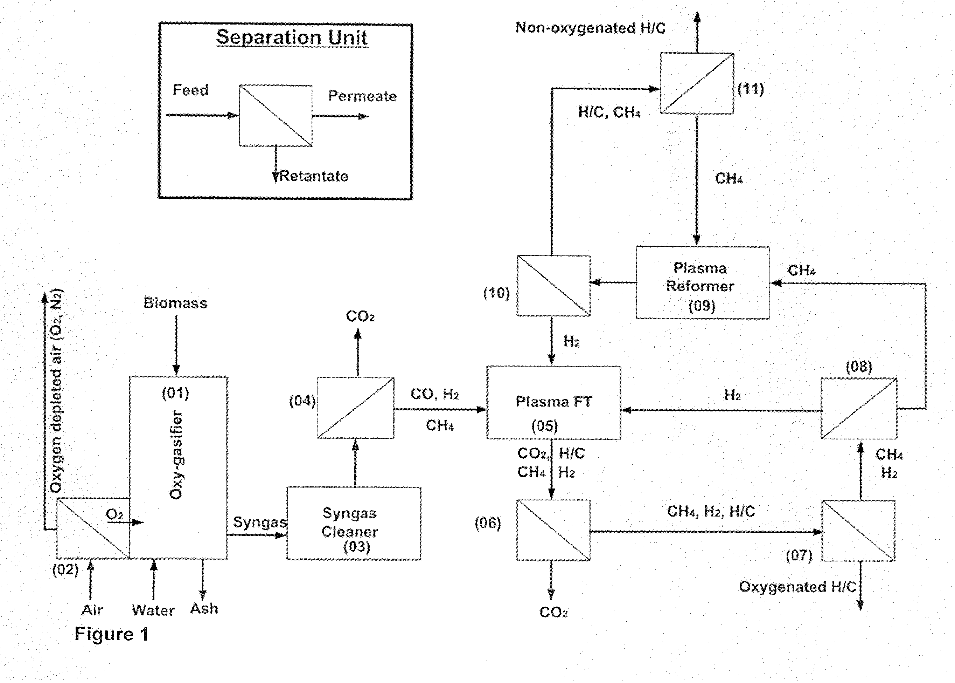

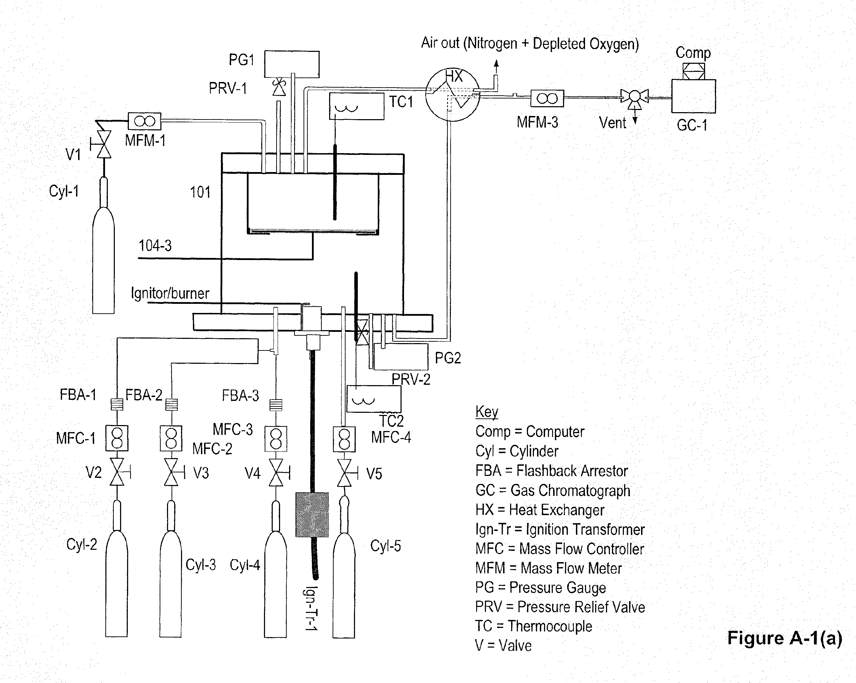

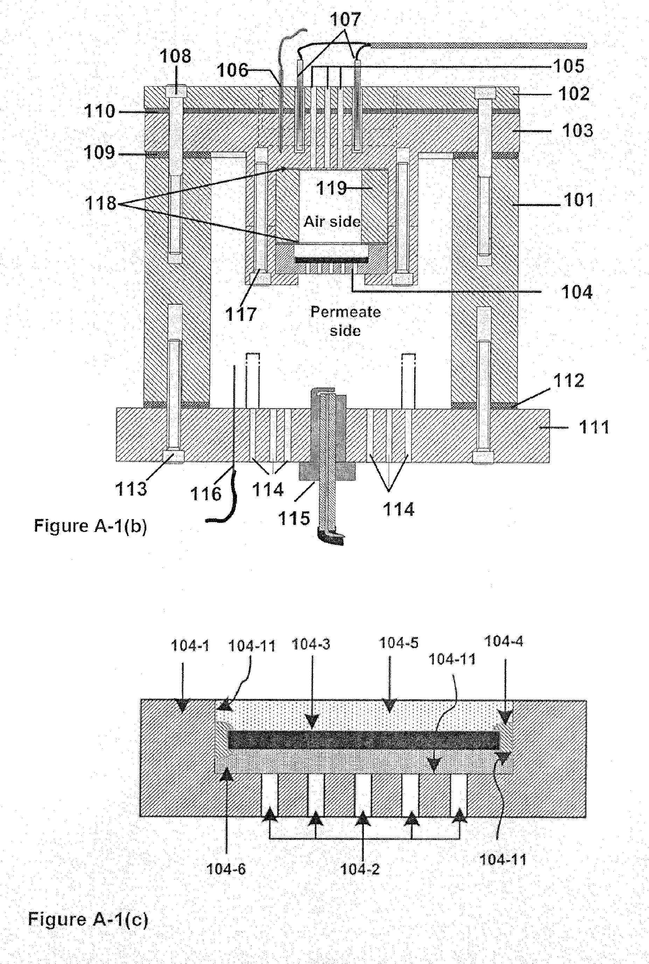

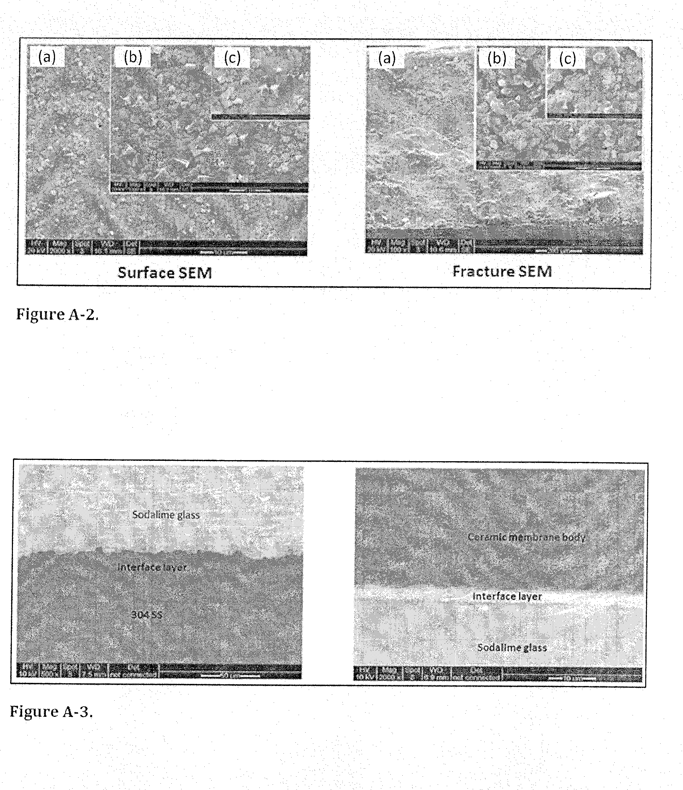

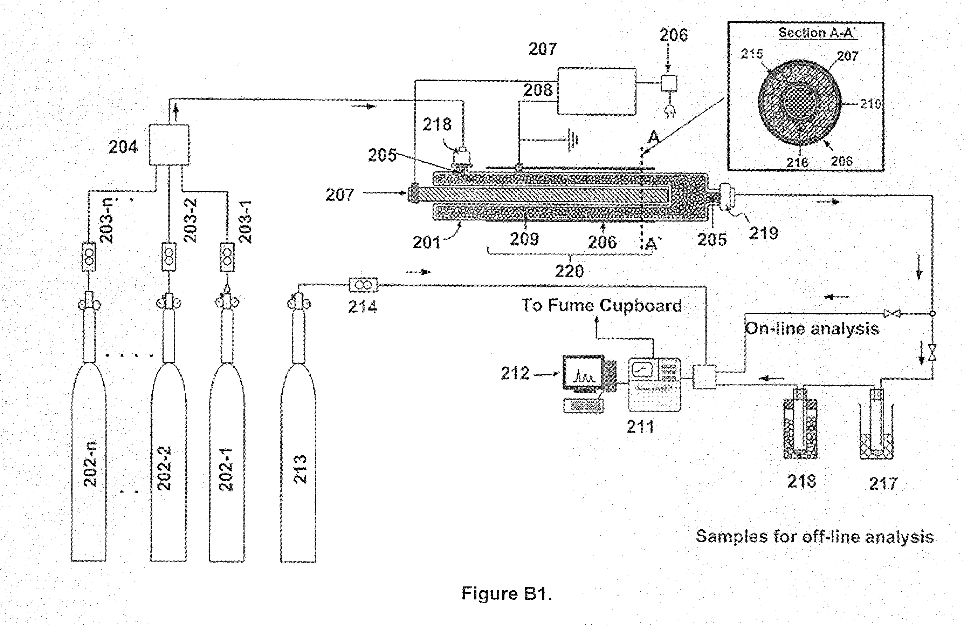

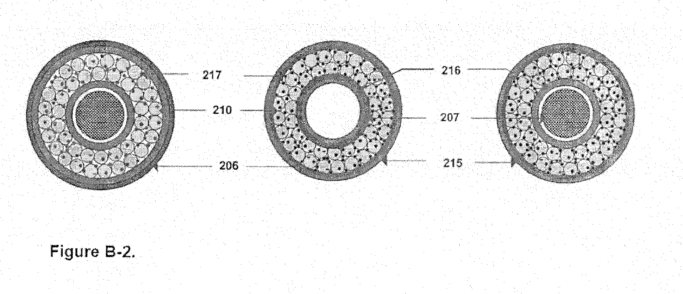

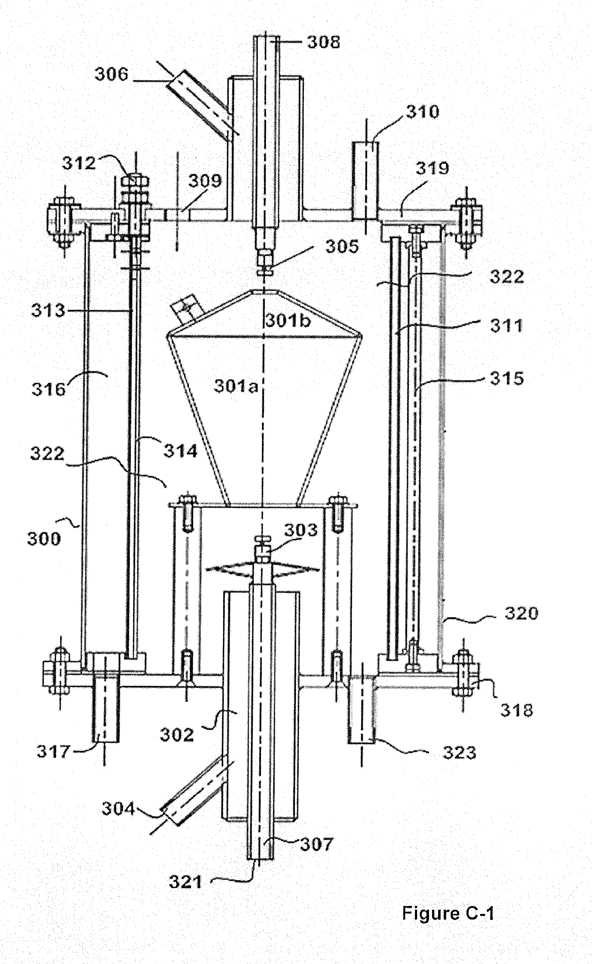

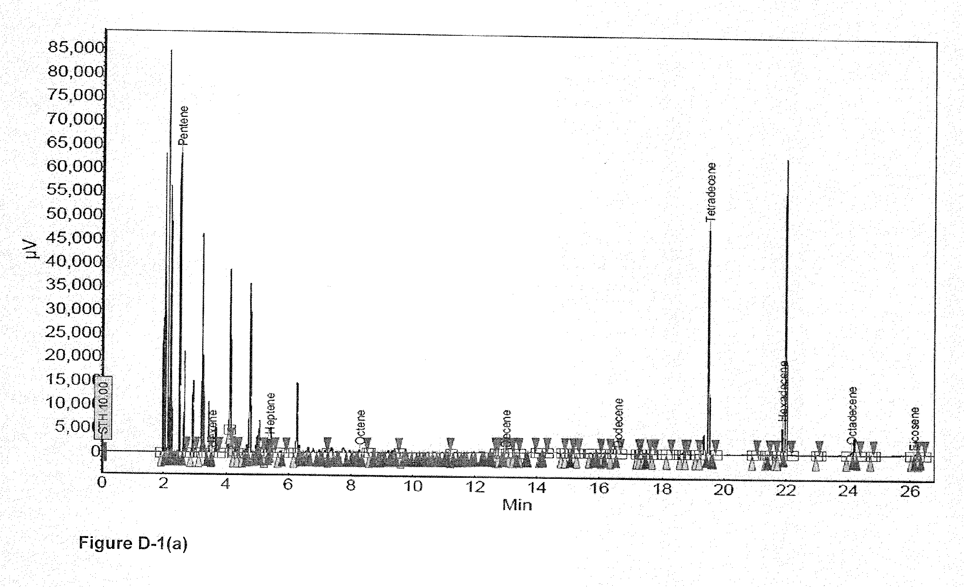

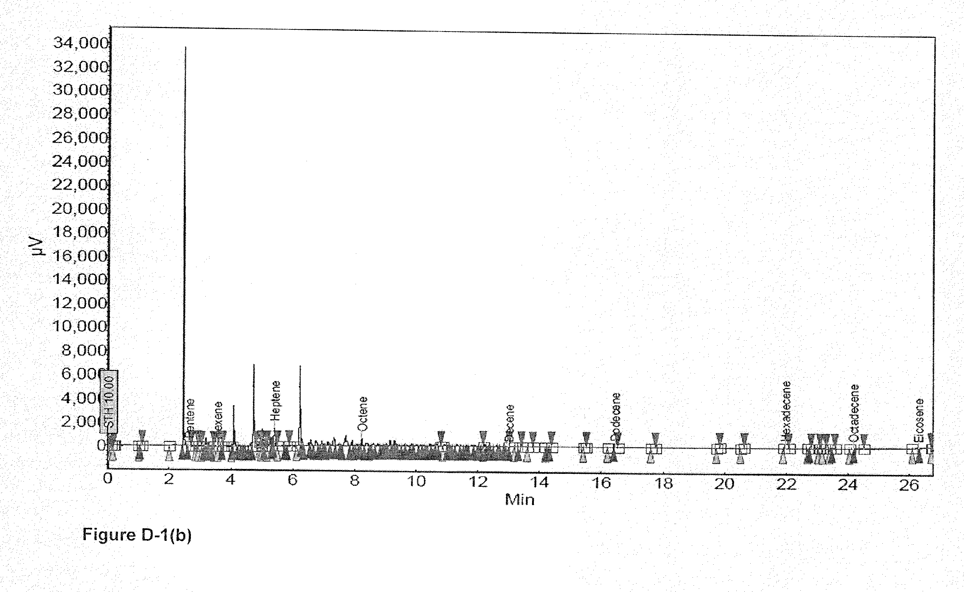

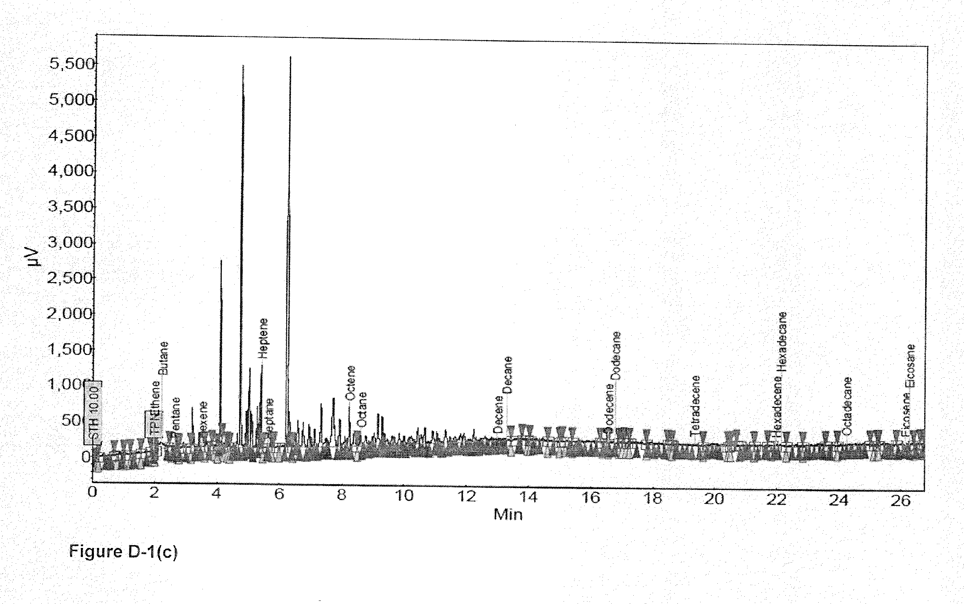

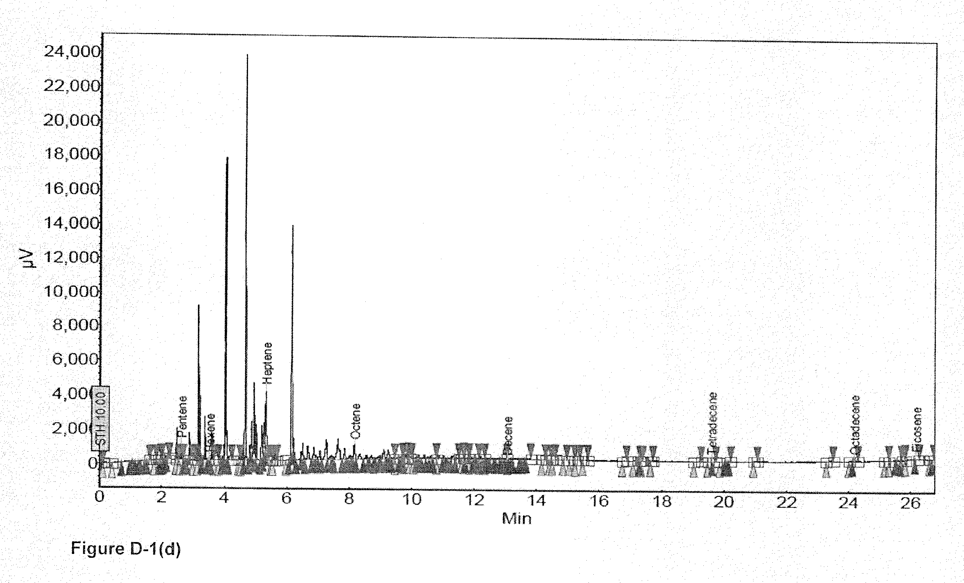

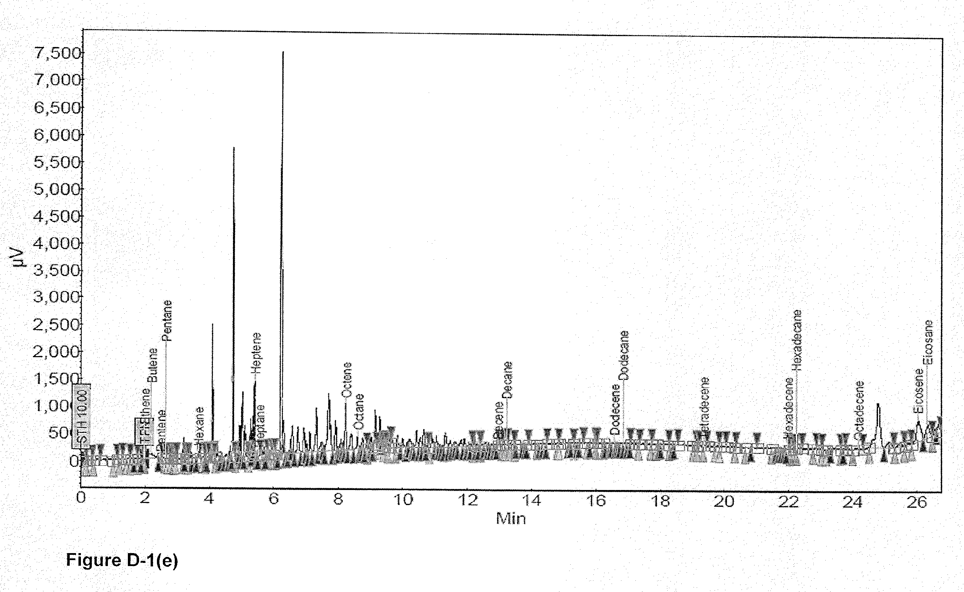

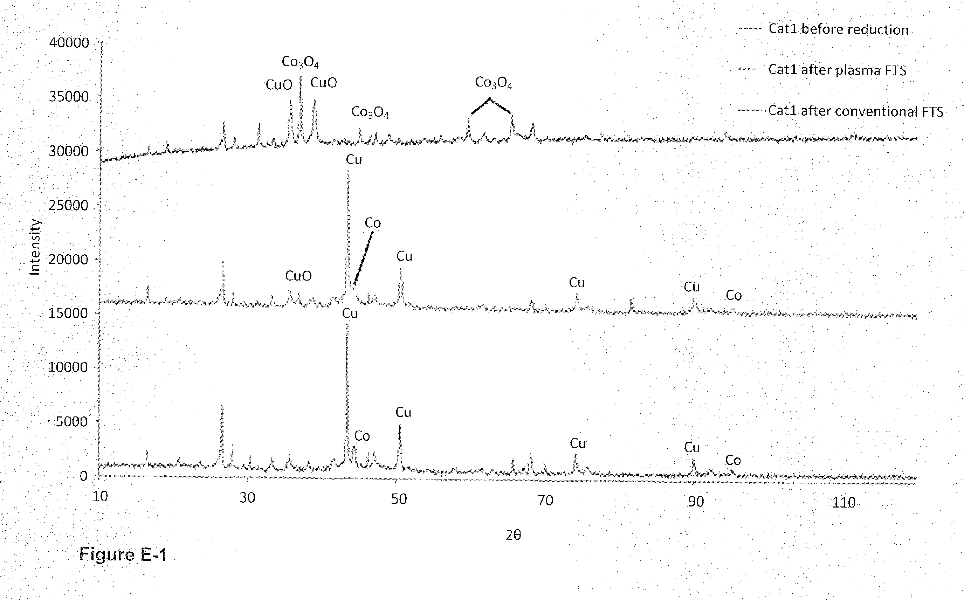

Figure 1 is a flow diagram of the integrated intensified biorefinery for the production of Fischer-Tropsch (FT) products (biofuels) with or without oxygenated hydrocarbons;

Figure A-1 (parts a-c) are a schematic representation of the apparatus used for the modelling of oxy-gasifier oxidation zone and for the measurement of oxygen permeability of membranes with an exothermic reaction on the permeate side. (a) Flow diagram; (b) Detail of the membrane test section; (c) Detail of the membrane holder and membrane sealing;

Figure A-2 shows scanning electron microscopy (SEM) images of (a) surface and (b) fracture surface of the oxygen selective membrane at magnifications showing the integrity of the membrane;

Figure A-3 shows SEM images of cross sections of (a) Ceramic membrane - Sodalime glass interface and (b) 304 Grade Stainless Steel (304SS) - Sodalime glass interface;

Figure B1 is a schematic process flow diagram of conversion processes using plasma reactors;

Figure B-2 is a cross-sectional view of a plasma reactor, along the line A-A' showing electrode arrangements in the plasma reactor including a) both electrodes isolated, b) both electrodes are non-isolated and in contact with the catalyst and plasma catalysis promoter (PCP) and c) the high voltage electrode is isolated and earth electrode is not isolated and in contact with the catalyst and plasma catalysis promoter (PCP);

Figure C-1 is a cross-sectional view of apparatus of the present invention used for the catalytic syngas cleaning equipment;

Figure D-1(a) is a Gas chromatogram of the model syngas before plasma treatment;

Figure D-1(b) is a Gas chromatogram of the model syngas after plasma treatment using sulphonated PolyHIPE Polymer (s-PHP);

Figure D-1(c) is a Gas chromatogram of the model syngas after plasma treatment using PHP-B-30;

Figure D-1(d) is a Gas chromatogram of the model syngas after plasma treatment at 50W without any polymer;

Figure D-1(e) is a Gas chromatograms of the model syngas after plasma treatment at 50W with sulphonated PHP; and

Figure E-1 are X-ray diffraction patterns of Co-Cu/Al-Si catalyst at various stages including a) Catalyst before reduction, b) Catalyst after reduction and c) After Fischer-Tropsch synthesis without plasma at 230°C and 1 bar.

Set out below are processes that are suitable for inclusion in integrated process intensification for the conversion of biomass into useful products. Such processes include processing in small volume reactors with a processes intensification field such as electric field, plasma field or the utilisation of the chemical potential of reactions as driving force for membrane separations. Below in Figure 1, a process flow diagram is given for the conversion of biomass-to-biofuel through gasification for the generation of syngas. The unit operations relevant to this process include:

1. Gasification with in situ air separation;
2. Syngas cleaning;
3. Carbon dioxide separation/removal;
4. Plasma reactor for syngas-to-liquid hydrocarbon conversion;
5. Separation of liquid hydrocarbons from hydrogen and methane;
6. Separation of hydrogen and methane; and
7. Direct methane conversion to non-oxygenated hydrocarbons.

In Figure 1, biomass is fed into an 'Oxy-gasifier' (01) in which air is separated (02) into oxygen and oxygen depleted streams. Oxygen is consumed in the gasifier as the oxidising agent. Alternatively, another oxidant such as water can be used as oxidant for biomass. The products of the gasifier are ash and syngas which is fed into a syngas cleaner (03). Here tars and solid particles are removed and recycled back to the gasifier. Clean syngas is fed into the carbon dioxide separator (04) and the remaining combustible gases enter into the first plasma reactor (05) denoted as the Plasma Fischer-Tropsch (PFT) reactor where carbon monoxide and hydrogen undergo to produce hydrocarbons. The products from the PFT reactor fed into the carbon dioxide separator (06) to remove carbon dioxide followed by the removal of hydrocarbons in the next separator (07). The unreacted hydrogen and methane is fed into a hydrogen separator (08) and hydrogen is recycled back into the Plasma FT-reactor (05). Methane gas is then fed into the second plasma reactor, direct methane conversion plasma reactor (09). Products from this $2^{nd}$ plasma reactor (09) include hydrogen, hydrocarbons (without oxygenated hydrocarbon compounds such as alcohols and acids) and unreacted methane. This reaction mixture is fed into the hydrogen separator (10) to remove hydrogen from the reaction mixture and to recover the liquid hydrocarbons and unreacted methane. Hydrogen from this reactor is fed into the Plasma Fischer Tropsch - reactor (05) while the hydrocarbons and unreacted methane is separated in the separator (11). Unreacted methane is fed into $2^{nd}$ plasma reactor (09) and the final product is recovered from the separator (11). This final hydrocarbon product is free of any oxygenated hydrocarbons, thus has a higher calorific value.

As seen from this flow diagram two types of hydrocarbons can be obtained; one with oxygenated hydrocarbons (mainly alcohols and acids) and the other hydrocarbon stream contains no oxygenated products. In the case of oil field flare gases or natural gas, they do not contain any oxygen and methane is the largest single component.

Therefore, the plasma reformer (09) can be used directly to convert such gases to liquid non-oxygenated, high calorific value hydrocarbons, including jet fuels.

**Example A: High temperature membrane separation of oxygen from air with reaction on permeate side**

Referring to Figures A-1(a) to (c), these diagrams show a membrane reactor for oxygen separation from air with inert/ reactive conditions at the permeate side. This reactor can be modified and incorporated into a gasifier as part of the oxidation zone of a gasifier (see WO 2012/025767 A2) so that the oxygen content of the oxidising agent in gasification is enhanced thus increasing the calorific value of the resulting syngas. Alternatively, this system can be used to model an enhanced oxygen powered gasifier. In the present work, the reactor designed and constructed was used in oxygen separation from air with permeate side either inert or with an exothermic reaction. Under non-reactive (inert) conditions, helium was used as a sweep gas. Although helium is not likely to be the sweep gas for choice in industrial scale oxygen separation using this technology, helium was chosen for ease of measurement of oxygen permeation through the membrane.

Referring to Figures A-1(b) and A-1(c), a support device 104 includes at least one support member, in the form of membrane holder 104-1, including at least one support surface 104-11. The device 104 includes a selectively permeable element, in the form of selectively permeable membrane 104-3 that is partially supported on the support surface 104-11. The device further includes a sealing portion 104-4 for sealing the selectively permeable membrane 104-3 to the support surface 104-11. The device may also include one or more foamed metals 104-5 and 104-6 that partially or fully cover the sealing portion 104-4 or the sealing portion 104-4 at the membrane 104-3.

The support member 104-1 is formed from a metal, for example stainless steel and the support surface 104-11 is preferably oxidised prior to the sealing with the glass seal 104-4 and this is achieved by heating the support member to oxidise the surface prior to introduction of the glass seal 104-4.

**Example A-1: Equipment**

The flow diagram of the full reactive membrane reactor equipment is shown in Figure A-1. It can be used as a model for the oxidation zone of a gasifier. At the centre of this equipment is the membrane reactor shown in Figure A-1(b). It consists of a stainless steel cylindrical shell (101). The top cover consists of a disc shaped lid (102) and head block (103), which has a protruding section at the centre on which a membrane holding module (104) is installed. Through this top cover, holes for gas pipe fittings (105), thermocouple (106) and Watlow cartridge heaters (107) were drilled as illustrated. This cover is fixed to the shell by means of 12 (108) screws with a thermoculite gasket (109) between the cylindrical shell (101) and head block (103), and another thermoculite gasket (110) between (102 and 103).

At the bottom of the shell is a stainless steel base (111) which functions as its bottom lid. This bottom lid is sealed to the cylindrical shell by means of a thermoculite gasket (112) and screws (113). Through the base is drilled several holes for the permeate side gas pipe fittings (114), igniter system (115) and thermocouple (116). The membrane module (104) is sealed to (103) by four screws (bolts) (117) and copper gaskets (118) and a stainless steel spacer (119).

The membrane holder (104-1) (Figure A-1(c)) in which the membrane was sealed with glass was fabricated from a stainless steel tablet of 35.9mm diameter and 12mm thickness which was machined into a cup of internal diameter (25.2mm) just slightly more than the diameter of the membrane disc (25.00mm), with several 2mm diameter holes (104-2) at the base. The purpose of the holes is to allow permeate oxygen emerging from the membrane to flow into the permeate chamber. The membrane holder was then heat treated in a furnace at 800°C to facilitate glass metal bonding during sealing. The heat treatment forms a thin layer of metal oxide film to facilitate bonding with the glass sealant. A thin layer of soft glass paste made from soft glass ground into fine powder and Polyethylene glycol (PEG) was applied onto the inner walls of the membrane holder and the membrane (104-3) gently placed into the membrane holder cavity, taking care not to rub off the glass-powder and PEG paste. With the membrane disc placed in position, the assembly was heated in a furnace to the melting point of the glass to make it flow into the gap between the edge of the membrane disc and the membrane holder wall. When the temperature is lowered the molten glass solidifies and creates a continuous layer of glass (104-4) between the membrane and the stainless steel cavity walls.

Optionally, after sealing of the membrane, a metal foam, usually nickel foam (104-5) can be placed over the top of membrane and a second protective metal foam beneath the membrane. The gas outlet is provided by several holes (104-2) drilled into the bottom of the membrane holder.

This equipment described above is a multipurpose rig that can be used for membrane permeation tests with chemical reaction in different configurations, oxygen production as well as oxygen separation combined with chemical reaction. It can also be used for hydrogen separation from hydrogen containing gas mixture by substituting a hydrogen membrane for the oxygen selective membrane. As there are already hydrogen selective metal membranes, the sealing problems for such membranes are not important. However, we discovered that by sandwiching hydrogen selective palladium based membranes between nickel foams, its permeability was enhanced.

As used in the current work for selective oxygen separation from air and inert/reactive permeate conditions, the set up consists of:

An air feed side with the associated pressurised air cylinder (Cyl-1), Mass Flow Meter (MFM-1). The permeate side with feed gases supplies for cylinders carbon monoxide (Cyl-2), methane (Cyl-3), syngas (Cyl-4), He (Cyl-5) and associated Mass Flow Controllers (MFC-1, MFC-2, MFC-3 and MFC-4). The flammable gas bottles, methane and syngas, are equipped with 2-stage pressure regulators for safety. Flashback arrestors (FBA-1, FBA-2 and FBA-3) were also installed on the fuel gas lines as additional safety measures.

The heating system consisting of cartridge heaters (not shown) to elevate the membrane temperature to the required levels required for oxygen permeation. The hot effluent gas from the permeate side passed through a Heat Exchanger (HX) to cool them down before reaching upstream heat sensitive system units such as the Mass Flow Meter (MFM-3).

The analytical systems consisted of thermocouples TC-1 and TC-2 to measure and monitor temperature of the membrane and permeate areas; a Mass Flow Meter (MFM-3) and an on-line Gas Chromatography (GC-1) to analyse the permeate side gases. Optionally, a soap bubble flow meter could be used to measure effluent gas flow rate in place of MFM-3.

The set-up is equipped with pressure relief valves (PRV-1 and PRV-2) connected to both chambers, which are activated in the event of pressure in the respective chambers of the reactor exceeding the pre-defined maximum values for safe operation.

**Testing procedure, gasket sealing and membrane integrity**

The membrane module was fixed inside the reactor as shown in Figure A-1. Screws provide and maintain the compressive force required to seal at the gaskets. Gasket seal integrity was tested at room temperature using a blank stainless steel tablet of same dimensions as the real membrane holder. The airside was pressurised up to 5 bar and any change in pressure in the permeate side monitored. Gasket seal integrity at room temperature was confirmed by absence of pressure build up in the permeate chamber. A build-up of pressure would mean the gasket seals were leaking. The same was done with a real membrane module to test for the seal integrity at room temperature with the ceramic membrane sealed to the stainless steel holder by glass. With seals integrity confirmed at room temperature, the equipment was tested for integrity at elevated temperature. This was done with the reactor heated to 650°C and the air feed side can be pressurised up to 10bar. However permeation experiments were conducted at ambient pressure for both the air side and permeate side chambers.

**Heating**

The membrane unit was heated by four 200 W Watlow 220V, 6 inch concentric heaters fitted in the head block as shown in figure A-1. The heaters were controlled by heating controller and a K-type thermocouple which was also fitted in a port on the head block as shown in Figure A-1. The reactor was insulated with ceramic fibre insulation to minimise heat loss during heating up.

**Igniter system**

The igniter system was provided for other applications this piece of equipment might be used for where there might be need for an ignition system. The ignition system consists of a long range automobile spark plug [Figure A-1 (115)], screwed at the bottom of the permeate chamber as shown. The spark plug is energised to generate a continuous spark across the gap by a high ac voltage generated from the mains supply using a variable transformer and an ignition transformer connected in series. The ignition transformer was supplied by Duomo UK plc. The igniter was capable of generating a continuous stream of sparks when a sufficient AC voltage is applied.

**Experiment procedure**

Air was fed into the airside chamber at a controlled flow rate and measured by MFM-1. At the permeate side inert sweep gas Helium (for the oxygen permeation under inert conditions) was fed at a controlled flow rate, from a gas bottle supplied by BOC through a Bronkhorst Mass Flow Controller (MFC-5). Both the air side and permeate side were maintained at ambient pressure.

The same procedure was used in the permeation test under chemical reaction conditions in the permeate side but with the permeate side fed with a fuel gas, e.g. methane, diluted with helium.

The concentration of the permeate oxygen is measured by means of an on-line Agilent 6890N Gas Chromatograph (GC-1).

The outlet stream flow rate was measured using a Bronkhorst Cori-flow (MFM-3). The composition of the outlet stream was measured using an Agilent 6890N Gas Chromatograph with a Thermal Conductivity Detector (TCD) and Helium as carrier gas. The GC is equipped with two columns, a Supelco 60/80 Molseive 5A column 6ft x 1/8 in; and an 80/100 Haysep Q column 8ft x 1/8 in.

The oxygen permeation flux $J_{O_2}$ mL/cm$^2$ was calculated from the total flow rate F (ml/min), the oxygen concentration $c_{O_2}$ (%) and the effective area of the membrane S (cm$^2$) based on the following equation:

$$J_{O_2} = \frac{c_{O_2} \times F}{100S}$$

**Example A-2: Membrane preparation**

The membrane materials chosen for this study is the perovskite type $La_{0.6}Sr_{0.4}Co_{0\cdot2}Fe_{0.8}O_{3-\delta}$ which, using notation that is often used in literature will hereinafter be denoted as LSCF6428. In this abbreviated notation, the first letters of the element symbol of each metal cation are written down followed by a list of numbers corresponding to the first significant figure of the stoichiometry of the respective metal cation. In this instance, L, S, C and F respectively stand for La, Sr, Co and Fe while the numbers 6, 4, 2 and 8 stand for 0.6, 0.4, 0.2 and 0.8 respectively, the stoichiometry of these cations.

The LSCF6428 powders used in the experiments were supplied by Praxair (PI-KEM, Tamworth, UK) and their specifications were as follows; (particle sizes $d_{10}$ = 0.6$\mu$m, $d_{50}$ = 0.9$\mu$m and $d_{95}$ = 3.9$\mu$m). For each disc, 2.0g of the powder were measure and pressed discs using Specac Atlas T25 Automatic Hydraulic Press and a die of 32mm diameter.

The pressed discs were heat treated in a box furnace from room temperature to 1150°C at a ramp rate of 1°C/min and dwelled at that temperature for 5 hours before being let to cool back to room temperature slowly. The discs shrunk from 32mm diameter and 2mm thickness to 25mm diameter and 1mm thickness.

The Scanning Electron Microscopy (SEM) studies of the surface and fracture surface (Figure A-2) showed that the membrane surface is completely dense and free from cracks. However, the cross-section SEM shows some porosity in the membrane bulk, but as these are closed pores, the membrane could be considered gas-tight.

**Membrane sealing**

A major challenge was achieving a hermetic seal between the membrane and the metallic structure it is assembled in. Besides operating at elevated temperature, the seal must endure both oxidizing and reducing environments simultaneously; oxidizing at the air side of the membrane and reducing at the permeate side (for a reactive membrane reactor configuration). Another big hurdle is developing a technique to join the two dissimilar materials (ceramic and metal) with different physical and chemical characteristics. Ceramics-metal interfaces have structural discontinuities in terms of electronic structure. Ceramics in general have covalent or ionic bonding while metals have metallic bonding. This difference in chemistry inhibits the formation of strong bonds at the interface. To address this, a sodalime glass composition was selected to provide gas tight bonding between metal and ceramic. However the electronic structure of glass is still different from that of metal. The structure of glass in general is that it is a network of bonds between network formers such as $SiO_2$, $B_2O_3$ and $P_2O_5$; network modifiers such as $Na_2O$, CaO and BaO; intermediate oxides such as $Al_2O_3$, and additives such ZnO and NiO. In particular sodalime glass has $SiO_2$ as the main network former and $Na_2O$ and CaO as the main network modifiers.

To bridge between the metal and glass and facilitate a strong chemical bond to provide the gas tight seal required, the stainless steel membrane holder was heat treated in air at 800°C for several hours. This enabled formation of a thin metal oxide on the surface of the metal. This enables molten glass to chemically react with the metal oxide. The oxide layer therefore provides a transition zone in which the metallic bond in the metal bulk is gradually substituted by the ionic-covalent bonding in the glass.

On the other hand, the ceramic membrane consists of mixed metal oxide perovskite type material which may readily chemically react with molten glass to form a gas tight interfacial layer between them the two. Experiments were conducted to verify this and the results are shown by SEM of the interface between sodalime glass and stainless steel which had been heat treated in air at 800°C; and SEM between sodalime glass and a dense ceramic body of the LSCF6468 to be used in oxygen membrane. Note that for comparison, a similar experiment with stainless steel not previously heat treated was contacted and the two did not bond at all.

Examinations at higher magnifications, around the interfaces showed no noticeable continuous porosity. This result shows a very good adhesion between Sodalime glass and Ceramic membrane surface on the one hand, and Sodalime glass and pre-heat treated 304SS surface on the other. Higher magnification micrographs (not shown) showed that for the particular conditions used, the 304SS-Sodalime glass joint had an average of 2 $\mu$m thickness, while that of Ceramic membrane - Sodalime glass had a thickness of about 20$\mu$m. The depth of the interlayer in the case of stainless steel might have been limited by the thickness of the metal oxide layer formed during the preoxidation process while that between the glass and ceramic body may have been limited by the length of time they remained at high temperature.

**Example A-3: Oxygen permeation**

Oxygen permeation rates using planar LSCF6428 membranes were measured using the apparatus shown in Figure A-1 with the procedure described in Example A-1. The inlet gas flows were controlled by Bronkhorst Mass Flow controllers. Air was introduced into the air side chamber of membrane reactor at 30mL/min. The permeate side sweep gas(es) where introduced into the permeate side at a total combined flow rate of 30mL/min. The permeation experiments were conducted at ambient pressure for both air side chamber and permeate side chamber and at a maximum of 650°C. The heat was supplied by four Watlow Cartridge heaters inserted into the block on which the membrane module was installed as previously described and illustrated on Figure A-1. The key objective of this experiment was to test for oxygen permeation through these membranes under different conditions:

(a) Inert conditions with helium as inert gas
(b) Reactive conditions with helium diluted methane as sweep gas.
(c) Reactive conditions with helium diluted carbon monoxide as sweep gas.

The effluent gases from the reactor were analysed using an Agilent 6890N equipped with a TCD detector and calibrated for $H_2$, $CO_2$, $O_2$, $N_2$, $CH_4$ and CO. A molecular sieve column with helium as carrier was used for quantitation of $O_2$, $N_2$, $CH_4$ and CO, while a Haysep column with helium as mobile carrier was used to detect and quantitate $H_2$ and $CO_2$.

Although examination of membrane and its seal to stainless steel the membrane showed little possibility of leakage of air into the permeate side as previously shown earlier, considerable amounts of nitrogen, up to around 5% were detected in the effluent gas stream. This was probably due to the difficulties in driving all the air in the permeate chamber prior to taking measurements. In addition, there were several other leakage possibilities into the permeate side through other structures of the membrane reactor such as the thermoculite used in assembling the reactor together. Nevertheless, the leaked oxygen into the permeate chamber was accounted for as described below.

The leaked oxygen was assumed to be in the same proportion with nitrogen as it was in the synthetic air cylinder supplied by BOC, which was specified as about same composition as atmospheric air. The leaked oxygen was therefore estimated using the formula:

$$c_{O2-leaked} = \frac{21}{79} c_{N2-leaked}$$

where $c_{O2-leaked}$ is the calculated molar concentration of leaked oxygen into the permeate side, and $C_{N2-leaked}$ is the molar concentration of leaked oxygen into the permeate side. The nitrogen, which is assumed inert, could be measured by the GC and the leaked oxygen could therefore be accounted for in the calculation for the electrochemically, selectively separated oxygen permeated from the air side to the permeate side.

In the experiment with helium diluted methane as permeate side sweep gas, the detected effluent gases were composed of carbon dioxide, nitrogen, unreacted methane and small traces of oxygen. Helium was not detected since the GC used in the experiment used helium as the mobile phase. This composition of the effluent gases indicates that:

(a) The converted methane was fully oxidized to carbon dioxide and water as there were no traces of hydrogen detected.
(b) The small traces oxygen far below the amount of computed leaked oxygen indicate that some of the leaked oxygen may have also reacted with methane to form carbon dioxide and water.

The oxygen involved in the permeate side was estimated from the following considerations:
The simplest oxidation mechanism that was assumed is the stoichiometric reaction of deep oxidation of methane given by:

$$CH_4 + 2O_2 \rightarrow CO_2 + 2H_2O$$

It assumes that the only products of methane oxidation are CO2 and $H_2O$. From this equation the amount of oxygen used can be derived directly from the measured $CO_2$ concentration. The underlying assumption made is that the $CO_2$ is only coming from methane oxidation and not from anywhere else. This assumption is reasonable given that the amount of any $CO_2$ leaked from air side or from the atmosphere is negligible, given that the concentration of $CO_2$ in air is 0.03%. The oxygen consumed in deep oxidation of methane is therefore obtained by simply doubling the measured $CO_2$ concentration in the effluent. From this, the leakage oxygen can be subtracted to obtain the electrochemically permeated oxygen though the membrane.
The formula for this computation is:

$$c_{O2-permeated} = c_{CO2-measured} - c_{O2-leaked} + c_{O2-measrured}$$

where $c_{O2-permeated}$ is the equivalent concentration of permeated oxygen, $c_{CO2-measured}$ is the concentration of $CO_2$ measured by the GC, $c_{O2-measured}$ is the concentration of measured unreacted $O_2$, and $c_{O2-leaked}$ is as previously defined. The oxygen flux through the membrane, in mLmin$^{-1}$cm$^{-2}$ was computed using the formula:

$$J_{O_2} = \frac{F_{out} \times c_{O2-permeated}}{A}$$

Where $J_{O_2}$ is the oxygen flux in mLmin$^{-1}$cm$^{-2}$ $F_{out}$ is the effluent gas flowrate in mLmin$^{-1}$ and A is the membrane area in cm$^2$.
For the experiment using helium diluted CO as sweep gas, the permeate side reaction is assumed to be:

$$CO + \frac{1}{2}O_2 \rightarrow CO_2$$

Similarly to methane above, it was assumed the $CO_2$ measured by the GC in the effluent gases was solely from oxidation of CO to $CO_2$. In this experiment, the effluent gases detected were $CO_2$, unreacted CO, $N_2$ and traces of $O_2$. The oxygen consumed in the reaction was derived from the equation above by halving the measured $CO_2$ concentration and the electrochemically permeated oxygen was computed from the formula:

$$c_{O_2-permeated} = \frac{1}{2}c_{CO_2-measured} - c_{O_2-leaked} + c_{O_2-measrured}$$

For the non-reactive sweep gas (helium only), the oxygen flux is obtained from the formula:

$$J_{O_2} = \frac{F_{out} \times c_{O_2-measured}}{A}$$

where $c_{O2-measured}$ is the oxygen concentration directly measured using the gas chromatography and other variables are as previously defined. $F_{out}$ was measured using a Mass Flow Meter as well as Bubble Flow Meter. In all cases it was observed to be not different to the input sweep gas flow rate. All reactive experiments were conducted in fuel rich conditions manifested by the presence of large proportion of the fuel ($CH_4$ or CO) in the effluent gases.

As explained earlier, the presence of $N_2$ in the effluent signified some form of air leakage into the permeate chamber, either across the membrane, membrane seal, or into the reactor through the reactor housing structures. The SEM examination of the membrane morphology as well as the seals between the LSCF6428 membrane and Sodalime glass and between 304 grade Stainless Steel and Sodalime glass, have shown good gas-tightness. The presence of nitrogen can therefore be attributed to leakage through other structures of the membrane reactor, whose gas-tightness integrity could not be ascertained.

The results of oxygen permeation experiments based on the LSCF6428 ceramic membrane of 1mm thickness and 25mm diameter sealed in stainless steel housing using a sealant Sodalime glass are shown in Table A1 At steady state conditions of each step i.e. He, ($CH_4$+He mixture), He only, and then finally (He+CO mixture), the effluent gases were tested at about 10 minute intervals using an in-line Agilent 6890N GC equipped with a TCD detector and calibrated to detect and quantitate $H_2$, $CO_2$, $O_2$, $N_2$, $CH_4$ and CO. From the concentration of oxygen containing species in the effluent, the oxygen permeation could be computed as discussed earlier.

Table A1. Variation of oxygen flux in the presence of an exothermic chemical reaction on the permeate side after one hour of reaction at 600 °C.

| Airside | Permeate side feed | | | Calculated values | | |
|---|---|---|---|---|---|---|
| Air feed mL/min | He feed mL/min | CH<sub>4</sub> feed mL/min | CO feed mL/min | Equiv. Permeated O2 | O2 Flow rate mL/h | O2 Flux mL/h/cm<sup>2</sup> |
| 30 | 30 | 0 | 0 | 0.11% | 1.8 | 1.2* |
| 30 | 15 | 15 | 0 | 1.79% | 32.4 | 18 |
| 30 | 15 | 0 | 15 | 2.05% | 36.6 | 18 |
| *Note: Represents background oxygen leakage | | | | | | |

## Example B: Plasma Reactor

A generic low temperature and low pressure plasma based intensified process was developed to carry out all of the reactions necessary for a bio-refinery technology. The flow diagram of the generic process is shown in Figure B1. The plasma reactor (201) which is further illustrated in Figure B2, consists of two cylindrical tubes made from quartz tube. The reactant gases are supplied from gas bottles (202) which are fitted with mass flow controllers (203). These gases are mixed in a mixer unit (204) before being fed into the reactor inlet. Both the reactor inlet and outlet contains glass wool (205) to prevent catalyst escape. In the diagram, the ground electrode (206) in the form of wire mesh is wrapped around the out cylinder while the high voltage electrode (207) is in the form of a stainless steel bar occupying the space in the inner cylinder. Both electrodes are connected to a high voltage source (208). The space between the quartz tubes (209) contains catalyst and plasma-catalysis promoter, PCP, (210) in the form of glass or Barium Titanate balls.

Reaction products from the reactor (201) are analysed using an on-line gas chromatography, GC, (211) and finally extracted into a fume cupboard. The data from the online-GC are stored in a computer (212) and analysed subsequently. The reference gas to the online-GC is supplied from a gas tank (213) at constant mass flow rate via a Mass Flow Controller (214). Reaction products are also recovered at two stages using two sequential cold traps either at 0 °C using ice cold water or dry ice at -78 0 °C. These products can also be analysed off-line by GC.

The cross-sectional view of the plasma reactor is shown in the inset of Figure B1 as well as in Figure B2 where 3 different electrode arrangements are illustrated. The outer tube (215) had an inside diameter (ID) of 32mm and was of length 300mm. The inner tube (216) had an outside diameter (OD) of 17mm thus leaving a 7.5mm gap between them. This gap is packed with either a catalyst, or plasma-catalysis promoter (PCP) (210) in the form of glass balls or Barium Titanate balls (Figure B-2) or a mixture of catalyst (217) and PCP (210). The ground electrode (206) was in the form of a wire mesh wrapped around the outside tube in the middle of the concentric tubes. High voltage electrode (207) was either a wire mesh or a stainless steel rod (as in Figure B-2). The length of the ground electrode was 17.3 cm giving an effective reactor volume of 100 ml. The remaining volume not occupied by the catalyst/pcp is packed with glass balls and glass wool. Plasma is generated only in the region where the shorter length electrode is present (i.e., ground electrode with a length of 17.3 cm).

In Figure B-2a, both electrodes are isolated from the reactor space by quartz walls which act as a dielectric barrier. It is also possible to place the ground electrode inside the outer cylinder to provide more electrical efficiency especially when PCP balls are used.

**Example C: Electric field enhanced tar removal equipment**

The diagrammatic representation of this equipment is shown in Figure C1.

An apparatus for removing long chain hydrocarbons for a stream of gas includes a vessel (300) formed from top and bottom plates (318) and (319) and an annular outer housing (320). The vessel has an inlet or gas entrance (304) and an outlet (306) between which a stream of gas passes. The vessel contains within it a plurality of electrodes including an anode, in the form of high voltage electrode (301) and a cathode in the form of ground electrode (311). The ground electrode (311) is in the form of an annular tube and the high voltage electrode (301) is located within that tube such that the stream of gas passes, as it travels from inlet (304) to outlet (308), between the high voltage electrode 301 and the ground electrode 311. One or both of the electrodes (301) and (311), although preferably the ground electrode (311), are formed including a catalyst.

One or both of the electrodes (301) and (311), although preferably the ground electrode (311), are formed from a porous metal, for example nickel, with the catalyst contained within the pores of the porous electrode. Examples of suitable electrodes include cobalt based catalysts including silica supported cobalt and cobalt nitrate. The catalyst may include one or more of nickel or iron and may also be a metal catalyst supported on a microporous solid support obtained or obtainable from a process comprising:

(A) adding together a metal catalyst precursor and surface-modified nanoparticles of the material of the microporous solid support to form an aqueous supported-catalyst precursor solution; and
(B) subjecting the aqueous supported-catalyst precursor solution to a source of energy at a power sufficient to cause repeated formation and collapse of films in the supported-catalyst precursor solution and to facilitate the emergence of the metal catalyst precursor or a decomposition product thereof supported on the microporous solid support.

The apparatus is provided with one or more spray nozzles. In the example shown, a bottom spray nozzle (303) sprays water perpendicular to apparatus axis line (321) against the ground electrode (311) as the stream of gas enters the apparatus. Similarly, the upper nozzle (305) sprays water perpendicular to axis line (321) and against ground electrode (311). This water assists in washing unreacted long chain hydrocarbons and tars from the ground electrode.

The space (322) between the electrodes (301) and (311) may be filled with solid material either as a fixed or fluidised bed. Suitable materials include tar adsorbent materials, including micro-porous PolyHIPE polymer and may also include one or more catalysts. Furthermore, if the apparatus is to be used as a plasma reactor (therefore not including the water), a plasma catalysis promoter, such as glass balls or barium titanate balls may be used and this is preferably used in conjunction with a catalyst thereby forming a plasma catalysis promoter.

In the embodiment shown, both the electrodes are annular and the inner electrode, in this example the high voltage electrode (301), is formed in two frusto conical portions (301a) and (301b). The first portion (301a), in the direction of travel of the flow of gas, has its narrowest portion towards the gas inlet (304) and its widest portion towards the gas outlet (306) such that in the direction of flow of gas the gas is forced to move radially outward from the axis (321) of the apparatus. This encourages movement of the gas, and in particular the particles contained therein towards the ground electrode containing the catalyst.

Looking at the apparatus shown in Figure C1 in more detail, this equipment can be used under at least the following processing conditions:

1. Water scrubbing using water spray at the entrance or exit of the equipment,
2. Application of a combined flow and electric fields with isolated or partially isolated profiled electrode to generate radial flow,
3. Combined water scrubbing and electric field,
4. Combined tar absorbent fixed bed and electric field,
5. Combined tar absorbent fluidised bed and electric field,
6. Dielectric barrier discharge plasma field with concentric electrodes,
7. Dielectric barrier discharge plasma field with fixed bed plasma catalysis promoter with/or without catalyst in the fixed bed,
8. Dielectric barrier discharge plasma field with fluidised bed plasma catalysis promoter (PCP) with/or without catalyst in the fluidised bed.

A diagrammatic illustration of the electric field enhanced tar removal equipment is shown in Figure C1. It consists of 3- concentric regions. The central region contains the high voltage electrode (301) in the form of truncated double cones (301a) and (301b) resting on an electrically isolated platform (302). There are two water sprays both producing a water plane though which the gases pass through. The bottom spray nozzle (303) is located just above the gas entrance (304) and the top spray nozzle (305) is located just below the gas outlet (306). Water is supplied to the bottom and top spray nozzles at locations (307) and (308) respectively. Gas inlet and outlets are concentrically located with the water supply to the bottom and top spray nozzles respectively. The exit ports (309) and (310) are used as access to provide facilities for the equipment. The exit port (309) is used for the insulated high voltage cable (not shown on the diagram).

This central region is separated from the outer region by a cylindrical porous nickel ground electrode (311) with ground electrode connection at (312) forming the $2^{nd}$ concentric region. Catalyst was inserted into this nickel electrode (311) using either electroless deposition technique (PCT WO/ 2010/041014) or preferably by coating this foam with a catalyst precursor such as $Co(NO_3)_2$ (with or without catalyst support) and subsequently heat treating the system as described in Example E (catalyst preperation). The porous catalytic electrode is caged between two wire mesh screens (313) and (314) respectively on either side of the ground electrode. This assembly is mechanically secured by 3 tie-rods (315) located at 120° to each others.

The porosity of this electrode is further reduced by the insertion of cobalt catalyst supported on silica using the method described in a recent patent application (British Patent Application 1201305.8). The function of this electrode is to capture and retain the tars when they are repelled radially outwards under the combined influence of electric and flow fields. The shape of the electrode is to promote radial component of the gas/tar velocity field. Once captured by the 'collector electrode', tars are either degraded or they form a viscous material which is gradually drained from the outer-concentric region (316) via the outlet (317). A further outlet for tars/liquids is provided at exit port (323). These 3 concentric regions are enclosed using two electrically isolated bottom (318) and top (319) plates to make the reactor gas tight. When operating under fluidised bed or fixed bed mode, catalyst or tar cracking/absorbing material in the fluidised or fixed bed is placed between two perforated plates placed on the tray where the central electrode (301) is secured and another perforated plate just under the top cover plate (319) of the reactor. These facilities are not shown in Figure C1.

The central high voltage electrode is either totally insulated when it is used with water spray, or it is partially isolated when no conductive material is present in the gas stream or in the fluidised or fixed bed. In the partial electrode isolation of the high voltage electrode, only large conical part (301a) is exposed and the remaining parts are still electrically isolated using high density polyethylene sintered on the stainless steel electrode.

This central electrode can also be used to generate plasma by using a cylindrical high voltage electrode coated with a dielectric barrier material such as barium titanate or glass. The porous collector electrode is again used as the ground electrode. The concentric annular gap between the electrodes is kept constant at 10 mm. Although water could be used when electric field is applied between the electrodes in which the high voltage electrode is isolated, no water spray could be used in the case of plasma assisted tar removal.

**Example D: Catalytic Syngas Cleaning**

Referring to Figures B1 and B2, a plasma reactor vessel (201) is used in a method of removing long chain hydrocarbons from a stream of gas. Plasma is generated in a plasma generation zone (220) of a vessel (201) between an anode, in the form of high voltage electrode (207) and a cathode in the form of ground electrode (206). A stream of gas is passed between an inlet (218) and an outlet (219) of the reactor vessel (201) thereby passing through the plasma generation zone indicated at (220). The reactor vessel (201) includes a catalyst (207) that is contained within the plasma generation zone (220). The plasma vessel (201) also includes plasma promoter material such as glass balls or barium titanate balls (210) and preferably a combination of catalyst and plasma promoter in the form of plasma-catalysis promoter. The catalyst may include any one or more of nickel, cobalt or iron and may also be a metal catalyst supported on a microporous solid support obtained or obtainable from a process comprising:

(A) adding together a metal catalyst precursor and surface-modified nanoparticles of the material of the microporous solid support to form an aqueous supported-catalyst precursor solution; and

(B) subjecting the aqueous supported-catalyst precursor solution to a source of energy at a power sufficient to cause repeated formation and collapse of films in the supported-catalyst precursor solution and to facilitate the emergence of the metal catalyst precursor or a decomposition product thereof supported on the microporous solid support.

In further detail, process is a sequential primary-secondary tar removal method which is used after syngas generation. It can remove 99% of the tars and convert them into shorter chain non-condensable components thus protecting the calorific value of syngas. This method can then be supplemented by a secondary tar removal method to enhance the tar depletion in syngas.

In the demonstration of the technique, we used a model tar and model syngas under laboratory conditions. As model tar, we used crude oil (supplied by BP Amoco) and as model syngas, we used carbon dioxide. Carbon dioxide from a gas bottle was bubbled through fresh crude oil at 80 °C. Resulting model tar/syngas mixture was then fed into the gas cleaning equipment. The concentration of the model tar before and after entering into the gas cleaning equipment was analysed by using the standard tar analysis method where tars are deposited through a series of traps (See CA Jordan and G Akay, Occurrence, composition and dew point of tars produced during gasification of fuel cane bagasse in a down draft gasifier, Biomass and Bioenergy, Vol. 32, pp. 51-58, 2012) using glass beads, silica gel and glass wool. Weight increases in these traps were recorded as condensable tar.

**Packed bed experiments:** As packing material for tar removal, we used porous PolyHIPE Polymers (PHPs). This material was prepared using the method described in:

G Akay, B Calkan, H Hasan and R Mohamed (2010). Preparation of nano-structured microporous composite foams, International Patent Publication PCT WO/ 2010/041014.

PolyHIPE Polymers are prepared through a High Internal Phase Emulsion (HIPE) polymerisation. HIPE is formed through mixing of the internal (aqueous medium) phase and the continuous (polymerisable oil medium) phase (see G. Akay et al., Development of nano-structured micro-porous materials and their application in bioprocess and chemical process intensification, in: New Trends in Chemical Engineering, Ed: MA Galan and EM Del Valle, Chapter 7, pp. 172-197, Wiley, 2005). We prepared 4 different PHPs using the same technique as described in PCT WO/ 2010/041014. These polymers differ in their composition as a result of which they have different physical and chemical properties. The materials used for syngas removal as packed bed formation had the following continuous oil phase and dispersed aqueous phase compositions. In all cases, the compositions are in weight percent. The volume fraction of the aqueous phase was 80 vol%.

As a silica source, Bindzil CC30 was supplied from AkzoNobel (Eka Chemicals, Finland). It contains 30wt% coated silica particles with average diameter of 7 nm.

The first stage of polymer production is the emulsification stage which was carried out at 25°C using a stirred stainless steel vessel (12 cm diameter) with a heating jacket. The oil phase was held in the mixing vessel and the aqueous phase was dosed at a constant rate for the duration of the dosing time. Mixing was carried out using two flat impellers at 90 degrees to each other so that the final level of the emulsion was about 1 cm above the top impeller. The lowest impeller on the stirrer shaft was as close to the bottom surface of the vessel as possible. In each experiment, the amount of internal phase was typically 225ml.

The processing conditions were: dosing rate of the aqueous phase was 10 minutes, impeller speed ($\Omega$) = 300 rpm and total mixing time (including the dosing time) was 40 minutes. After emulsification, the emulsion was transferred to cylindrical containers (26 mm internal diameter) and the emulsion was polymerized at 60°C for 24 hours. Emulsions containing silica particles were shaken during polymerisation in order to prevent sedimentation. This process was stopped after 4 hours of polymerisation when the gelling of the emulsion started.

After polymerisation, samples were cut off in the form of 4 mm disks and they were washed in a Soxhlet apparatus to remove the surfactant and unreacted monomers.

The washing was first done using iso-propanol for 3 hours, and then followed by 3 hours washing in double distilled water to get rid of any remaining residues in the pores and interconnects. They were dried initially in a fume cupboard followed by further drying at 60 °C in an oven overnight. These samples were then used in determining their surface area and in the tar removal experiments.

**1- Sulphonated PolyHIPE Polymer: s-PHP**

**Continuous / Polymerisable Oil Phase:** Styrene (monomer) = 76 % ; Divinyl benzene (crosslinking agent)= 10 %; Sorbitan monooleate (Span 80; surfactant)= 14 %. **Dispersed /Aqueous Phase:** Concentrated sulphuric acid (as nano-structuring agent) = 5 wt% ; Potassium persulphate (polymerisation initiator) = 1 wt% ; Double distilled water = 94%.

After the washing of these disk-shaped samples were soaked in concentrated (98%) sulphuric acid for 150 min. Excess acid was removed and the samples were irradiated in a kitchen microwave oven for 30 sec followed by 1 minute cooling period. This process was repeated 5 times. As a result of sulphonation, samples become swollen and hydrophilic. These samples were subsequently washed to remove any excess acid followed by drying before being used in the experiments. This sample is coded as s-PHP (sulphonated PolyHIPE Polymer). Typically, it has surface area of 10 m$^2$/g.

**2- Silica containing styrene PolyHIPE Polymer: B30**

**Continuous / Polymerisable Oil Phase:** Styrene (monomer) = 67 % ; Divinyl benzene (crosslinking agent) = 20% ; Sorbitan monooleate (Span 80, surfactant = 12 %; Lauroyl peroxide (polymerization initiator)=1 %.

**Dispersed /Aqueous Phase:** Bindzil CC30 (coated silica content 30 wt %).

**3- Cross-linked Styrene- Vinyl Silane High Internal Phase Emulsion Co-polymer: S30**

**Continuous / Polymerisable Oil Phase:** Styrene (monomer) = 38 % ; VTMS (vinyl trimethoxy silane, co-monomer) = 30 % ; Divinyl benzene (crosslinking agent)= 20 % ; Sorbitan monooleate (Span 80, surfactant)=12 %. **Dispersed /Aqueous Phase:** Distilled water with 1 % Potassium persulphate.

**4- Cross-linked, Silica Filled Styrene- Vinyl Silane High Internal Phase Emulsion Co-polymer: S30B10**

**Continuous / Polymerisable Oil Phase:** Styrene (monomer) = 38 %; VTMS (vinyl trimethoxy silane, co-monomer) = 30 %; Divinyl benzene (crosslinking agent) =20%; Sorbitan monooleate (Span 80, surfactant)=12 %.

**Dispersed /Aqueous Phase:**

Bindzil CC30 diluted with double distilled water to obtain 10 % silica with 1% Potassium persulphate.

**Example D-1: Primary tar removal by catalytic plasma**

The plasma reactor described in Example B was used in this example since the equipment described in Example C had very large volume to test for the evaluation of the catalysts.

The plasma equipment shown in Example B was connected to the model syngas generator. In this case, the length of the ground electrode was 130 mm and it started from 2 cm from the gas inlet region. Therefore the plasma was generated in the first 130 mm of the reactor. The plasma region was packed with 3 mm glass balls as plasma catalysis promoter. The next 130 mm region of the reactor (where no plasma was generated) was packed with PolyHIPE Polymer particles, approximately 2-3 mm in size (Total weight= 20 g) . These particles were trapped in this region by using additional glass balls at the remaining region of the reactor at the exit. Model syngas flow rate was 1 litre/min. The experiments were carried out for 3 hours. Temperature of the inlet gas was kept at 43 $\pm$ 3 °C. Plasma power was 50W. Plasma treated syngas was subjected to the tar evaluation procedure from which amount of tar present in the model syngas was determined. Small amount of gas samples were withdrawn at the inlet and outlet of the reactor and the tar compositions were analysed to assess the effectiveness of the plasma tar cleaning.

Tar removal efficiency (X) was calculated from

$$X = [(Cin - Cout)/Cin] \times 100$$

where, Cin, and Cout are the tar concentration at the inlet and outlet of the equipment respectively.

The results are summarised in Table D-1.

Table D-1. Variation of the tar removal efficiency (X) as a function of plasma power and the type of tar absorbent porous PolyHIPE Polymer. Surface area of the tar absorbents are also given together with reference to Gas Chromatography results.

| Cleaning System → Parameter ↓ | s-PHP | PHP (B-30) | PHP (S-30) | PHP (S30G10) | Plasma Only (50W) | Plasma with s-PHP (50W) |
|---|---|---|---|---|---|---|
| Efficiency X (%) | 59.1 | 93.6 | 75.5 | 85.5 | 71.4 | 91.0 |
| Surface area ($m^2$/g) | 9.4 | 87.5 | 55.4 | 66.2 | - | 9.4 |
| GC- Fig D1. | D1.b | D1.c | - | - | D1.d | D1.e |

It clear that the best result is obtained with silica containing PHP (B-30) as a result of high surface as well as due to the presence of silica. Nevertheless, plasma by itself also results in tar reduction and the combination of s-PHP with plasma enhances this process. It appears that the most effective combination would be the combination of Plasma with PHP (B-30).

The tar reduction results presented above are also confirmed by gas chromatography experiments. Figure D1 (a-e) are the gas chromatograms of model syngas at the entrance to the reactor (Figure D1a) and at the exit of the plasma reactor after treatment with various polymers and plasma conditions as tabulated in Table D1.

**Example D2: Catalytic tar removal under electric field**

The electric field enhanced tar removal equipment described in Example C was used in this example. The concentration of the model tars was measured at the entrance, $C_{in}$, to the equipment and at the exit $C_{out}$, after tar removal.

**Summary of Experimental conditions:** Throughout these examples, the following processing conditions were used:

Model syngas flow rate= 1 litre/min; $C_{in}$=22.0 $\pm$ 2.1 g/Nm$^3$;

Gas inlet temperature = 43 $\pm$ 3 °C; Gas outlet temperature = 20 $\pm$ 2 °C

Scrubbing water (tap water) flow rate=1.66 litre/min;

Scrubbing water inlet temperature= 20 $\pm$ 2 °C

Temperature of the equipment = 20 $\pm$ 2 °C

Total surface area of the insulated high voltage electrode= 812 cm$^2$

Total surface area of the exposed part of the partially insulated electrode= 298 cm$^2$

Applied high voltage = 10 kV or 25 kV

Duration of experiments = 3 hours

Amount of sulphonated PolyHIPE HIPE Polymer used as packing material (in the form of ca. 3 cm diameter, 5 mm thick disks) = 76 g.

**Results:** The performance of the equipment is summarised in Table D2. As reference, we used a dry run. Due to the temperature reduction in the equipment (from 40 C down to 20 C), some model tar condensation occurs in the syngas cleaning equipment. Therefore, this Reference gas cleaning efficiency (Experiment No. 1 in Table D1) was evaluated by running the experiment without any tar removal facility (i.e., dry run). The dry run experiments were extended to the cases when electric field was applied (at 10 kV or 25kV) using the high voltage electrode (301) either when it was fully electrically insulated (Experiment No: 1) or when it was partially insulated (Experiment No: 6) .

Water scrubbing was done by creating a planar water spray either at the bottom (303) or top (305) or indeed both sprays could be used. Due to the total electrical insulation of the high voltage electrode, it was possible to apply electric field at 10 or 25 kV. These results are shown in Table D2 (Experiment No. 2-4)

Further enhancement of tar removal was achieved by using porous PolyHIPE Polymers packed into the space between the high voltage electrode and ground electrode. Packing material was only used in the absence of water scrubbing. These results are shown in Table D2 (Experiment No. 5,7).

Table D2 indicates that most effective tar removal was obtained (97.5%) when partially insulated high voltage electrode was used at 25 kV. The use of PolyHIPE Polymer as packing material only marginally improved the tar removal efficiency.

**Table D-2. Tar removal results under electrical field**

| Experimental conditions | Applied voltage (kV) | | |
|---|---|---|---|
| | 0 (a) | 10 (b) | 25 (c) |
| **Electrically insulated high voltage electrode. No packed bed present** | | | |
| 1. Reference: Dry run (No water scrubbing) | 19.1 | 21.8 | 30.1 |
| 2. Water scrubbing from bottom | 30.9 | 41.4 | 55.0 |
| 3. Water scrubbing from top | 41.8 | 48.6 | 57.7 |
| 4. Water scrubbing from top and bottom | 45.9 | 56.4 | 72.3 |
| **Electrically insulated high voltage electrode. With a packed bed of sulphonated PolyHIPE Polymer. No water scrubbing** | | | |
| 5. With a packed bed of sulphonated PolyHipe Polymer | 61.8 | 67.3 | 78.2 |
| **Partial electrical insulation of high voltage electrode. Without a packed bed of sulphonated PolyHIPE Polymer. No water scrubbing** | | | |
| 6. Without a packed bed of PolyHIPE Polymer | 19.6 | 80.1 | 97.5 |
| **Partial electrical insulation of high voltage electrode. With a packed bed of sulphonated PolyHIPE Polymer. No water scrubbing** | | | |
| 7. With a packed bed of sulphonated PolyHIPE Polymer | 62.1 | 86.6 | 98.7 |

In all cases, we have monitored the inlet and outlet gas composition using gas chromatography (GC). Figure D1 illustrates GC-data under 6 different conditions:

a) Before tar removal (1a; X=19.1%) which also indicate the range of hydrocarbons present in the model syngas.

b) After tar removal at 25 kV using fully insulated electrode without water scrubbing or sulphonated PolyHIPE Polymer (1c; X=30.1%).

c) After tar removal using water scrubbing with top and bottom sprays without electric field (4a; 45.9%).

d) After tar removal at 25 kV using fully insulated electrode with water scrubbing using top and bottom sprays (4c; X= 72.3%).

e) After tar removal without electric field using PolyHIPE Polymer (5a; X=61.8%).

f) After tar removal at 25 kV using partially insulated electrode without water scrubbing or PolyHIPE Polymer (6c; X=97.5%).

The above results indicate that the selectivity of various tar removal methods are different and that dry tar removal (no water scrubbing) with partially isolated electrode is the most efficient and simple technique. This efficiency can be further increased by increasing the surface area of the catalytic electrodes. The high voltage electrode can also be covered with the porous metal containing the catalyst for tar degradation, hence contributing to the calorific value of the syngas. The use of a packed bed of micro-porous tar adsorbents with an electric field indicates that over 99% tar removal is possible.

### Example E: Fischer-Tropsch-synthesis for gas-to-liquid conversion

We used the plasma reactor equipment described in Example B to demonstrate the conversion of a mixture of carbon monoxide and hydrogen gas to liquid hydrocarbons (i.e., Gas-to-Liquid conversion) through what is known as Fischer-Tropsch (FT)-synthesis. The simplified conversion can be represented through the formation of alkanes.

$$(2n + 1)\ H_2 + n\ CO \rightarrow C_nH_{(2n+2)} + {}_n\ H_2O$$

In this example we demonstrate the use of low temperature dielectric barrier discharge plasma in FT-synthesis in the presence of a very high surface area silica supported highly porous catalyst.

**Catalyst preparation:** Two types of supported catalysts were used. The first catalyst was cobalt supported on silica and the second type of catalyst was cobalt-copper catalyst supported on aluminosilicate.

**Co/Si Catalyst:** Silica ($SiO_2$) supported cobalt catalyst with molar ratio of [Co]/[Si] = 1:4 was prepared from a precursor solution of Bindzil CC 30 as silica precursor and $Co(NO_3)_2$ as catalyst precursor. Sufficient amount of $Co(NO_3)_2$ was dissolved in Bindzil CC30 to obtain the desired cobalt/silica molar ratio. 10 ml of this mixed precursor solution was placed in a 19 cm diameter watch glass and irradiated at 1 kW power input using a kitchen microwave oven for 4 minutes. As a result, $Co(NO_3)_2$ decomposed to cobalt oxide ($Co_3O_4$). This sample is coded as BB-9A. This supported catalyst oxide was heat treated at 600 °C for 2 hours in air in order to remove the coating material around the silica particles. This sample was coded as BB-9B and it was subsequently used in plasma reactor for the conversion of carbon monoxide and hydrogen mixture (at a molar ratio of [$H_2$]/[CO] =2/1).

Before the reaction, this supported cobalt oxide must be reduced to cobalt. The reduction was carried out in the plasma reactor placed in a tubular furnace using hydrogen gas at 50 ml/min flow rate for 24 hours without any plasma at two different temperatures; 400 and 550 °C. Sample reduced at 400 °C directly from the non-heat treated original silica supported cobalt oxide (BB-9A) was coded as (BB-9C). The sample reduced at 400 °C using the heat treated material, BB-9B was coded as BB-9C1 while the sample reduced at 550 °C from the heat treated material BB-9B was coded as BB-9C2.

After reduction, small amounts of samples were removed for X-Ray Diffraction analysis from where the crystallite size was determined in which we used the strongest diffraction line. The summary of the oxidation state and the crystallite size of these samples at various stages are shown in Table E1. It is clear that the crystallite size of $C_{03}O_4$ increases with heat treatment and that the reduction at 400 °C does not result in any detectible metallic cobalt. The crystallite size of Co is considerably larger than that of the CoO or $Co_3O_4$.

**Table E1. Characteristics of the silica supported catalyst as a function of processing history evaluated from XRD patterns**

| Sample Code | Reduction Temperature (°C) | Reduction from sample (Code) | Co(111) Size (nm) | CoO(200) Size (nm) | $Co_3O_4$(311) Size (nm) |
|---|---|---|---|---|---|
| BB-9A | - | - | N/D* | N/D* | 9.20 |
| BB-9B | - | - | N/D* | N/D* | 10.1 |
| BB-9C | 400 | BB-9A | Not available | | |
| BB-9C1 | 400 | BB-9B | N/D* | N/D* | 12.5 |
| BB-9C2 | 550 | BB-9B | 15.6 | 5.01 | ND* |
| Notes: N/D*: Not detected | | | | | |

### Co-Cu/Al-Si Catalyst:

Catalysts were prepared by the incipient wetness method using metal nitrate solutions. The following steps were followed to prepare Co-Cu catalysts:

1. Ceramic monoliths (aluminosilicate, $Al_2SiO_5$ supplied by SELEE Ceramics, USA) was dipped in 40 ml solution containing 9.9g cobalt nitrate;
2. Solution evaporated at 100°C;
3. Dried at 100°C for 3 hours;
4. Baked in air at 350°C;
5. Ceramic monolith dipped in 40 ml solution containing 7.5g copper nitrate followed by steps 2-4.
6. Repeat steps 1-5 to obtain the desired loading of catalyst.
7. The weight ratio of Co/Cu =1 and the amount of metal was 8 g, which represented 35 wt% metal loading in the catalyst system.
8. Once metals are deposited onto the ceramic substrate surface, the catalysts were dried in an oven at 100°C for 3 hours. Then, catalysts were baked in air in a furnace at 350°C. Catalysts were then reduced under flowing hydrogen for 12 hours at constant flow rate of 100 ml/min at temperature of 350 °C. The catalyst size as evaluated by Transmission Electron microscopy was ca. 10 nm. The monolithic support was crushed to obtain particles of ca. 2-3 mm size to be used as packing in the plasma reactor. The X-Ray diffraction patterns of the catalysts at various stages are shown in Figure E-1.

**Fischer Tropsch Synthesis using Co/Si catalyst:** The plasma reactor system described in Example-B was used in the FT-synthesis. No plasma catalysis promoter (PCP) was used. 20 g catalyst BB-9C or BB-9C1 or BB-9C2 was placed in the plasma zone of the reactor with a volume of 100 ml. The size of the catalyst particles was 1-3 mm. Outside the plasma zone, 3 mm diameter glass balls were packed. Glass wool was placed at the inlet and outlet of the reactor. The reactor was used in a fume cupboard without insulation so as to allow heat dissipation generated by plasma as well as the FT-synthesis. The surface temperature of the reactor was controlled at $150 \pm 5$ °C whereas the temperature at the centre of the reactor where the catalyst bed was $240 \pm 10$ °C as measure at the end of each experimental run. Temperature measurements were made at various locations and averaged to obtain a nominal mean reactor temperature.

The wall power consumed by plasma system was measured by a plug-in power meter. The plasma power dissipated in the discharge was calculated by integrating the product of voltage and current. The applied voltage was 10 kV at a frequency of 20 kHz and power consumption was 90W. Both electrodes were isolated and they were separated from the catalyst through the quartz dielectric barrier material of the reactor with thickness of 1.5 mm.

This reactor was fed a mixture of carbon monoxide and hydrogen at molar ratio of $[H_2]/[CO] = 2$. The feed gases, CO and $H_2$, were introduced into the reactor from highpressure bottles via mass flow controllers, admitting a total gas flow of 25.2 ml/min. The reaction products were analysed online using a gas chromatography (Varian 450-GC) from which the carbon monoxide conversion was determined.

The reaction products were analysed online using a Varian 450-GC. The GC is equipped with 2 ovens, 5 columns and 3 detectors (2 TCDs and 1 FID). One oven houses 3 columns (hayesep T 0.5m x1/8" ultimetal, hayesep Q 0.5m x1/8" ultimetal and molsieve 13x1.5m x1/8" ultimetal) to detect permanent gases. The second larger oven houses a CP-SIL 5CB FS 25X.25 (.4) column for hydrocarbons and a CP-WAX 52CB FS 25X.32 (1.2) for alcohols. The mass balance of the reaction was obtained by adding a controlled flow of nitrogen (20ml/min) as reference gas to the exit of the reactor in order to monitor the change of volume flow due to the reaction. All results are reported in mole percent.

The conversion of CO is defined as

$$\text{CO Conversion (mole \%)} = 100 * \frac{CO \ (mole \ input) - CO \ (mole \ output)}{CO \ (mole \ input)}$$

The conversion of $H_2$ is defined as

$$\text{H2 Conversion (mole \%)} = 100 * \frac{H2 \ (mole \ input) - H2 \ (mole \ output)}{H2 \ (mole \ input)}$$

The product selectivity is defined as

$$\text{Selectivity (product)}_i = 100 * \frac{(Number \ of \ carbon \ atoms \ in \ product \ i)*(Mole \ of \ product \ i)}{Carbon \ atom \ number \ onverted}$$

Here, i = $CO_2$, $CH_4$, $C_2H_4$, $C_2H_6$, $C_3H_6$, $C_3H_{10}$, $C_4H_8$, $C_4H_{10}$. The selectivity to Cs+ hydrocarbons was calculated from the carbon balance of the reactions.

**Results**

Table E-2 illustrate carbon monoxide and hydrogen conversion for 3 catalysts coded as BB-9C; BB-9C1 and BB-9C2 after 100 hours of continuous FT-synthesis at 240 °C under identical conditions. It was found that 100 % conversion was obtained when the catalyst BB-9C2 was used even after 150 hours of continuous reaction. In the case of the catalyst BB-9C1, initially 100% conversion was observed (in the first 15 hours) but the conversion decayed gradually and stabilised after 100 hours. The catalyst BB-9C initially showed some activity (30% carbon monoxide conversion after 30 min) but rapidly decayed to zero after 24 hours. Hence in this case, the results obtained after 17 hours were tabulated in Table E-2.

The product distribution for two catalysts BB-9C and BB-9C1 was also evaluated when the reaction temperature was 240 °C and plasma power was 90W.

**Table E-2: Carbon monoxide and hydrogen conversion as a function of plasma power and time when the reactor temperature was 240 °C using the catalysts described in Table E-1.**

| Catalyst system → | BB-9C2 | BB-9C1 | BB-9C | | |
|---|---|---|---|---|---|
| Plasma power → Reaction time → Conversion ↓ | 90 W 100 h | 90 W 100 h | P=90 W 100 h | P=0 W 17 h | P=0 W 25 h |
| Carbon monoxide conversion (mol %) | 100 | 67.7 | 29.6 | 15.1 | 0 |
| Hydrogen conversion (mol %) | 63 | 39.2 | 15.5 | 8.1 | 0 |
| Product Selectivity (mol %) | | | | | |
| Methane ($C_1$) | 56.0 | 37.4 | 40.6 | 22.4 | - |
| Carbon Dioxide | 31.3 | 24.1 | 31.2 | 14.7 | - |
| $C_2$ | 2.5 | 0.3 | 1.0 | 1.2 | - |
| $C_3$ | 1.4 | 0.2 | 0.4 | 0.5 | - |
| $C_4$ | 2.3 | 0.3 | 0.6 | 0.8 | - |
| $C_5$+ | 6.5 | 37.7 | 26.2 | 60.4 | - |

In the plasma assisted Fischer-Tropsch reaction over the Co based porous catalyst, we detected methane, carbon dioxide, and higher hydrocarbons including ethylene, propylene, propane, butylene, butane and other higher hydrocarbons in the outlet gas stream. The product distribution for two catalysts BB-9C and BB-9C1 was also evaluated when the reaction temperature was 240 °C and plasma power was 90W. These results refer to 100 hours of reaction in the presence of plasma and 17hrs in the absence of plasma since the conversion in the absence of plasma decays to zero within 24 hours. The results are tabulated in Table E-2.

**FT-Synthesis using Co-Cu/Al-Si catalyst:** The same plasma reactor system described in Example B was used in these examples. The flow rate of the $CO+H_2$ gas mixture was constant at 100 ml/min. The amount of Co-Cu/Al-Si was 23g which contained 8g metal catalyst. The ratio of $[H_2]$ / $[CO]$ = 0.5, 1.0. or 2.0. Unlike the previous case, the mean pressure was 1, 3 or 6 bar. The results are tabulated in Tables E-3, 4, 5 are obtained after 50 hours of continuous experimentation. These results show that with Co-Cu/Al-Si catalyst, under plasma conditions no methane is formed. Furthermore, conversion decreases with increasing pressure under plasma conditions whereas the opposite is true for no-plasma conditions.

Table E-3. Product selectivity of plasma assisted FT-synthesis at 1 bar (Co-Cu/ Al-Si Catalyst)

| Pressure | 1 bar | | | | | | | | |
|---|---|---|---|---|---|---|---|---|---|
| $H_2/CO$ | 0.5 | | | 1 | | | 2 | | |
| Power (W) | 50 | 70 | 90 | 50 | 70 | 90 | 50 | 70 | 90 |
| CO conversion | 11 | 16 | 21 | 15 | 18 | 24 | 24 | 31 | 38 |
| $CH_4$ Selectivity % | 0.00 | 0.00 | 1.63 | 0.00 | 0.00 | 0.00 | 0.00 | 0.00 | 0.00 |
| $CO_2$ Selectivity % | 13.95 | 25.30 | 32.97 | 5.06 | 11.13 | 19.58 | 2.83 | 7.89 | 11.77 |
| HC Selectivity % | 86.05 | 74.70 | 65.40 | 94.94 | 88.87 | 80.42 | 97.17 | 92.11 | 88.23 |

Table E-4. Product selectivity of plasma assisted FT-synthesis at 3 bar(Co-Cu/Al-Si Catalyst)

| Pressure | 3 bar | | | | | | | | |
|---|---|---|---|---|---|---|---|---|---|
| $H_2/CO$ | 0.5 | | | 1 | | | 2 | | |
| Power (W) | 50 | 70 | 90 | 50 | 70 | 90 | 50 | 70 | 90 |
| CO conversion | 10 | 9 | 10 | 11 | 12 | 17 | 15 | 21 | 24 |
| $CH_4$ Selectivity % | 0.00 | 0.00 | 0.00 | 0.00 | 0.00 | 0.00 | 0.00 | 0.00 | 0.00 |
| $CO_2$ Selectivity % | 0.00 | 1.38 | 10.26 | 0.00 | 0.38 | 6.03 | 0.00 | 0.00 | 4.32 |
| HC Selectivity % | 100.00 | 98.62 | 89.74 | 100.00 | 99.62 | 93.97 | 100.00 | 100.00 | 95.68 |

Table E-5: Product selectivity of plasma assisted FT-synthesis at 6 bar (Co-Cu/Al-Si Catalyst)

| | With Plasma | | | | | | Without Plasma | | |
|---|---|---|---|---|---|---|---|---|---|
| Pressure | 6 bar at Room Temperature | | | | | | 6 bar at 230 °C | | |
| $H_2/CO$ | 0.5 | | | 1 | | | 1 | 0.5 | 0.33 |
| Power (W) | 50 | 70 | 90 | 50 | 70 | 90 | 0 | 0 | 0 |
| CO conversion | 6 | 6 | 7 | 9 | 8 | 8 | 47 | 34 | 22 |
| $CH_4$ Selectivity % | 0.00 | 0.00 | 0.00 | 0.00 | 0.00 | 0.00 | 42 | 19 | 11 |
| $CO_2$ Selectivity % | 2.64 | 1.37 | 0.00 | 0.00 | 0.00 | 0.00 | 21 | 15 | 20 |
| HC Selectivity % | 97.36 | 98.63 | 100.00 | 100.00 | 100.00 | 100.00 | 37 | 66 | 69 |

In the above tables, hydrocarbon (HC) selectivity includes HCs as well as alcohols. Water could not be identified or quantified hence could not be accounted for in the analysis of data and discussion in the following sections. Alcohol selectivity was very low and was not treated separately in the tables as typical values were 1-3% of the total hydrocarbons.

**Example F: Conversion of methane to hydrocarbons and hydrogen**

As shown in Example E (Table E-3), the FT-synthesis of CO + $H_2$ yielded considerable amount of methane and carbon dioxide as well as liquid hydrocarbons with carbon number 5 or greater. This conversion also resulted 100% carbon monoxide conversion. Therefore, it is possible to remove all of the oxygenated carbons (i.e., CO and $CO_2$) through the plasma FT synthesis at atmospheric pressures and low reaction temperatures using catalytic plasma reactors and carbon dioxide separation by using well known techniques. Essentially, this method where all of the oxygenated carbons are removed from syngas, can be described as de-oxygenation of syngas and enhancement of hydrogen either as free hydrogen ($H_2$) or as chemically bound hydrogen in the form of methane ($CH_4$). Hydrogen itself essential for FT-synthesis since the [$H_2$] / [CO] ratio in syngas is not sufficient to achieve optimum reaction conditions.

Another important property of hydrogen is that it can be separated easily from other gases. Hence the required hydrogen for the FT-synthesis can be either provided from other sources of hydrogen such as methane or through steam reforming of carbon dioxide and/or carbon monoxide or indeed by electrolysis of water.

We have discovered that when methane was subjected to catalytic plasma reaction, it is converted to hydrogen and non-oxygenated hydrocarbons. In this example we used the plasma reactor described in Example-B. The reactor configuration is such that both electrodes are isolated. In this example, we only used plasma catalysis promoter (PCP) in the plasma space (100 ml in volume and 17.3 cm in length occupying the central space of the reactor) between the electrodes. This space was filled with 5 mm sodalime glass balls acting as plasma catalysis promoter. Methane gas ($CH_4$) was fed into the reactor at constant flow rate of 25 ml/min. The emerging gases were analysed using a gas chromatography. The concentration of hydrocarbons with carbon number equal or greater than 5 was calculated through mass balance in order to obtain product selectivity. The results are shown in Table F-1 where the variation of methane conversion as well as the selectivity for hydrogen and C2, C3, C4 and C5+ are shown as a function of plasma power. It is clear that the methane conversion increases with increasing plasma power and that the selectivity for C5+ hydrocarbons also increases.

**Table F-1. The effect of plasma power on methane conversion and non-oxygenated hydrocarbon selectivity when the total flow rate is 25 ml/min**

| Plasma Power (W) | 80 | 100 | 120 |
|---|---|---|---|
| $CH_4$ Conversion (mol. %) | 22.4 | 28.0 | 33.7 |
| Product Selectivity (mol. %) | | | |
| $H_2$ selectivity (mol %) | 59.4 | 59.0 | 55.7 |
| Hydrocarbon selectivity (mol %) | 40.6 | 41.0 | 44.3 |
| Carbon Number Selectivity (mol %) | | | |
| $C_2$ | 20.0 | 18.4 | 16.6 |
| $C_3$ | 19.2 | 19.0 | 18.0 |
| $C_4$ | 17.6 | 18.0 | 17.2 |
| $C_5+^*$ | 43.2 | 44.6 | 48.2 |
| $C_5+^*$: calculated from carbon number balance. | | | |

**Table F-2. The effect of total flow rate of methane on conversion and selectivity at when the plasma power is 100 or 120 W.**

| Plasma Power (W) | 120 | 100 | 100 | 100 |
|---|---|---|---|---|
| Total flow rate (mL/min) | 25 | | 37.5 | 50 |
| $CH_4$ Conversion (mol. %) | 33.7 | 28 | 20 | 15.6 |
| Product Selectivity (mol %) | | | | |
| $H_2$ selectivity (mol %) | 59.0 | 55.7 | 59.1 | 60.1 |
| Hydrocarbon selectivity (mol %) | 41 | 44.3 | 40.9 | 39.9 |
| Carbon Number Selectivity (mol %) | | | | |
| $C_2$ | 18.4 | 16.6 | 40.7 | 43.7 |
| $C_3$ | 19.0 | 18.0 | 19.7 | 20.3 |
| $C_4$ | 18.0 | 17.2 | 19.2 | 19.2 |
| $C_5+^*$ | 44.6 | 48.2 | 20.4 | 16.8 |

It will be appreciated by person skilled in the art that the above embodiments have been described by way of example only and not in any limitative sense, and that various alterations and modification are possible without departure from the scope of protection which is define by the appended claims.

**Claims**

1. An apparatus for the removal of long chain hydrocarbons from a stream of gas, the apparatus comprising:

    a vessel including at least one inlet and at least one outlet, allowing a stream of gas to pass therebetween;
    a plurality of electrodes including at least one anode and at least one cathode, contained within said vessel, such that said stream of gas passes between at least one said anode and at least one said cathode, wherein at least one said electrode comprises at least one catalyst.

2. An apparatus according to claim 1, further comprising at least one of the following features:

    a) wherein at least one cathode comprises at least one said catalyst;
    b) wherein at least one anode and at least one cathode comprise at least one catalyst;
    c) wherein said electrode including said catalyst further comprises at least one porous metal;
    d) wherein said electrode including said catalyst comprises at least one porous metal, said metal comprising nickel;
    e) wherein said catalyst comprises a cobalt based catalyst;
    f) wherein said catalyst is supported on silica;
    g) further comprising at least one water supply for supplying a spray of water into said vessel;
    h) wherein said catalyst is a metal catalyst supported on a microporous solid support obtained or obtainable from a process comprising:

        (A) adding together a metal catalyst precursor and surface-modified nanoparticles of the material of the microporous solid support to form an aqueous supported-catalyst precursor solution; and
        (B) subjecting the aqueous supported-catalyst precursor solution to a source of energy at a power sufficient to cause repeated formation and collapse of films in the supported-catalyst precursor solution and to facilitate the emergence of the metal catalyst precursor or a decomposition product thereof supported on the microporous solid support;

    and
    i) wherein said gas is syngas.

3. An apparatus according to claim 1 or claim 2, further comprising at least one bed of solid material located at least partially between said electrodes.

4. An apparatus according to claim 3, further comprising at least one of the following features:

    a) wherein said bed comprises a fixed bed;
    b) wherein said bed comprises a fluidised bed;
    c) wherein said solid material comprises at least one tar adsorbent;
    d) wherein said solid material comprises at least one catalyst;
    e). wherein said solid material comprises at least one PolyHIPE polymer; and
    f). wherein said solid material comprises at least one plasma catalysis promoter.

5. An apparatus according to any of claims 1 to 4 wherein at least one electrode is annular forming an outer electrode extending around an inner electrode.

6. An apparatus according to claim 5, further comprising at least one of the following features:

    a) wherein said outer electrode comprises a cathode and said inner electrode comprises an anode;
    b) wherein said inner electrode is annular; and
    c) wherein said inner electrode is at least partially conical.

7. A method for removing long chain hydrocarbons from a stream of gas, comprising passing a stream of gas between at least one inlet and at least one outlet of a vessel;
the stream passing between a plurality of electrodes including at least one anode and at least one cathode, wherein at least one of said electrodes comprises at least one catalyst.

8. A method according to claim 7, wherein said gas is syngas.

9. An apparatus for the removal of long chain hydrocarbons from a stream of gas, the apparatus comprising:

a vessel including at least one inlet and at least one outlet, allowing a stream of gas to pass therebetween; and a plurality of electrodes including at least one anode and at least one cathode, having a space therebetween contained within said vessel, such that said stream of gas passes between said electrodes, wherein a cross-sectional area of the space between the electrodes, measured perpendicular to the path of the stream of gas, decreases at at least one point between said inlet and said outlet.

10. An apparatus according to claim 9 wherein at least one electrode is annular forming an outer electrode extending around an inner electrode.

11. An apparatus according to claim 10, further comprising at least one of the following features:

a) wherein said outer electrode comprises a cathode and said inner electrode comprises an anode;
b) wherein said inner electrode is annular; and
c) wherein said inner electrode is at least partially conical.

12. An apparatus according to any of claims 9 to 11 wherein at least one electrode comprises a catalyst.

13. An apparatus according to claim 12, further comprising at least one of the following features:

a) wherein at least one cathode comprises at least one said catalyst;
b) wherein at least one anode and at least one cathode comprise at least one catalyst;
c) wherein said electrode comprising said catalyst further comprises at least one porous metal;
d) wherein said electrode comprising said catalyst further comprises at least one porous metal, said metal comprising nickel;
e) wherein said catalyst comprises a cobalt based catalyst;
f) wherein said catalyst is supported on silica; and
g) wherein said catalyst is a metal catalyst supported on a microporous solid support obtained or obtainable from a process comprising:

(A) adding together a metal catalyst precursor and surface-modified nanoparticles of the material of the microporous solid support to form an aqueous supported-catalyst precursor solution; and
(B) subjecting the aqueous supported-catalyst precursor solution to a source of energy at a power sufficient to cause repeated formation and collapse of films in the supported-catalyst precursor solution and to facilitate the emergence of the metal catalyst precursor or a decomposition product thereof supported on the microporous solid support.

14. A method of removing long chain hydrocarbons from a stream of gas, comprising:

generating plasma in a plasma generation zone of a vessel between an anode and a cathode, passing a stream of gas between at least one inlet and at least one outlet and through said plasma generation zone of said vessel, said vessel containing at least one catalyst within said plasma generation zone.

15. A method according to claim 14, further comprising at least one of the following features:

a) wherein said vessel also contains at least one plasma promoter;
b) wherein said vessel contains at least one plasma promoter comprising at least one of barium titanate and glass balls;
c) wherein said catalyst comprises at least one of nickel, cobalt and iron; and
d) wherein said catalyst is a metal catalyst supported on a microporous solid support obtained or obtainable from a process comprising:

(A) adding together a metal catalyst precursor and surface-modified nanoparticles of the material of the microporous solid support to form an aqueous supported-catalyst precursor solution; and
(B) subjecting the aqueous supported-catalyst precursor solution to a source of energy at a power sufficient to cause repeated formation and collapse of films in the supported-catalyst precursor solution and to facilitate the emergence of the metal catalyst precursor or a decomposition product thereof supported on the micro-porous solid support.

Figure 1

**Figure A-1(a)**

Key
Comp = Computer
Cyl = Cylinder
FBA = Flashback Arrestor
GC = Gas Chromatograph
HX = Heat Exchanger
Ign-Tr = Ignition Transformer
MFC = Mass Flow Controller
MFM = Mass Flow Meter
PG = Pressure Gauge
PRV = Pressure Relief Valve
TC = Thermocouple
V = Valve

EP 2 837 423 A2

28

Figure A-1(b)

Figure A-1(c)

Figure A-2.

Figure A-3.

Figure B1.

Figure B-2.

Figure C-1

Figure D-1(a)

Figure D-1(b)

Figure D-1(c)

Figure D-1(d)

Figure D-1(e)

Figure E-1

EP 2 837 423 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2013050122 W
- WO 2012025767 A2
- WO 2010041014 A
- GB 1201305 A

**Non-patent literature cited in the description**

- **CA JORDAN ; G AKAY.** Occurrence, composition and dew point of tars produced during gasification of fuel cane bagasse in a down draft gasifier. *Biomass and Bioenergy,* 2012, vol. 32, 51-58
- Development of nano-structured micro-porous materials and their application in bioprocess and chemical process intensification. **G. AKAY et al.** New Trends in Chemical Engineering. Wiley, 2005, 172-197